(19) **Europäisches Patentamt / European Patent Office / Office européen des brevets**

(11) **EP 3 879 872 B1**

(12) **EUROPEAN PATENT SPECIFICATION**

(45) Date of publication and mention of the grant of the patent:
**22.10.2025 Bulletin 2025/43**

(21) Application number: **19890850.1**

(22) Date of filing: **25.11.2019**

(51) International Patent Classification (IPC):
***H04W 24/02*** *(2009.01)*

(52) Cooperative Patent Classification (CPC):
**H04W 24/02**

(86) International application number:
**PCT/CN2019/120623**

(87) International publication number:
**WO 2020/108433 (04.06.2020 Gazette 2020/23)**

(54) **NETWORK PARAMETER PROCESSING METHOD AND DEVICE**

VERFAHREN UND VORRICHTUNG ZUR NETZWERKPARAMETERVERARBEITUNG

PROCÉDÉ ET DISPOSITIF DE TRAITEMENT DE PARAMÈTRE DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2018 CN 201811420338**

(43) Date of publication of application:
**15.09.2021 Bulletin 2021/37**

(73) Proprietor: **Huawei Technologies Co., Ltd.**
**Longgang District**
**Shenzhen, Guangdong 518129 (CN)**

(72) Inventors:
• **ZHU, Chongming**
**Shenzhen, Guangdong 518129 (CN)**
• **XU, Zhijie**
**Shenzhen, Guangdong 518129 (CN)**
• **CHEN, Zhitang**
**Shenzhen, Guangdong 518129 (CN)**
• **CHUAI, Jie**
**Shenzhen, Guangdong 518129 (CN)**
• **SHEN, Feiyi**
**Shenzhen, Guangdong 518129 (CN)**
• **LIU, Guochen**
**Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
WO-A1-2012/072445    WO-A1-2015/089804
WO-A1-98/44428    CN-A- 102 883 352
CN-A- 102 883 352    CN-A- 103 826 230
CN-A- 108 271 183    CN-A- 108 271 183
US-A1- 2015 195 136    US-A1- 2016 162 783
US-A1- 2016 269 911

## Description

### TECHNICAL FIELD

This invention relates to network technologies and the invention in particular relates to a network parameter processing method, a network parameter processing device, a computer-readable storage medium, and a computer program product.

### BACKGROUND

With continuous development of network technologies, various types of networks emerge, for example, a 5th generation mobile communications network (the 5th generation mobile communication technology, 5G) network, an ultra-dense network (ultra-dense network, UDN), and a multi-band network. Therefore, network operation and maintenance becomes increasingly complex. To improve network performance, a radio parameter on a network needs to be optimized.

In a conventional technology, radio network big data and an artificial intelligence (artificial intelligence, AI) analysis method may be used to search for an optimal combination configuration of radio parameters. Specifically, before a radio parameter of a to-be-optimized cell is optimized, a table may be established to record network data of the to-be-optimized cell or another cell, where the network data includes cell state information and the radio parameter. Then, a value-based reinforcement learning algorithm (Q-Learning) model is updated by using the network data that is in the table, and an updated Q-Learning model is used to optimize the radio parameter of the to-be-optimized cell.

However, in the conventional technology, the Q-Learning model is established based on network data of only one cell, and the used network data is inadequate. Consequently, the radio parameter of the to-be-optimized cell cannot be optimized well.

WO2012072445A1 discloses a method of controlling a telecommunications network. Examples of learning systems and network optimization during run-time are provided facilitating adaptation to a system state.

US20160162783A1 discloses techniques for autonomous, closed-loop and adaptive simulated annealing based machine learning approach for intelligent analytics-assisted Self-Organizing-Networks (SONs).

WO9844428A1 provides a system which uses previous fault data and present measured data to diagnose faults within a telecommunications system. The telecommunications fault diagnostic system is formed having a remote test unit (RTU) operatively coupled to a neural network. The RTU, which is conventional in the field of telecommunications diagnostics, is operatively coupled to a telecommunications system through a local exchange.

### SUMMARY

The present invention provides a network parameter processing method, a network parameter processing device, a computer-readable storage medium, and a computer program product, as defined in the appended set of claims, to resolve a problem that a radio parameter of a to-be-optimized cell cannot be optimized well.

In this invention, the radio parameter prediction model that is obtained by performing joint learning based on network data of a plurality of cells is established, and radio parameters of the cells are optimized by using the radio parameter prediction model. Because the established radio parameter prediction model combines network data features of the plurality of cells, a radio parameter of a to-be-optimized cell may be optimized well, that is, in this embodiment, joint learning may be performed based on the network data of the plurality of cells. In addition, in this embodiment, cell states represented by cell state information may be continuous. In other words, cell state information of the to-be-optimized cell in a continuous time period may be obtained, so as to reflect an actual network state of the to-be-optimized cell, and then the to-be-optimized cell is analyzed by using the radio parameter prediction model, so as to obtain a radio parameter applicable to the to-be-optimized cell.

### BRIEF DESCRIPTION OF DRAWINGS

FIG. 1 is a schematic diagram of an application scenario according to an embodiment of this application;
FIG. 2 is a schematic flowchart of a network parameter processing method according to an embodiment of this application;
FIG. 3 is a schematic flowchart of another network parameter processing method according to an embodiment of this application;
FIG. 4 is a diagram of a relationship between a radio parameter and an optimization target value according to an embodiment of this application;

FIG. 5 is a diagram of a relationship between a quantity of times of iterations and a delta difference according to an embodiment of this application;

FIG. 6 is a schematic block diagram of a network parameter processing apparatus according to an embodiment of this application;

FIG. 7 is a schematic block diagram of another network parameter processing apparatus according to an embodiment of this application; and

FIG. 8 is a schematic structural diagram of a network parameter processing device according to an embodiment of this application.

## DESCRIPTION OF EMBODIMENTS

Embodiments of this application are applied to a network parameter processing apparatus, a network parameter processing device, a network parameter processing system, or any system that can execute the embodiments of this application. The following describes some terms in this application, to facilitate understanding of a person skilled in the art. It should be noted that when the solutions in the embodiments of this application are applied to the network parameter processing device or any system that can execute the embodiments of this application, names of the network parameter processing apparatus and the network parameter processing device may change, but this does not affect implementation of the solutions in the embodiments of this application.

It should be understood that, the technical solutions in the embodiments of this application may process network parameters in various communications systems, for example, a wireless local area network (wireless local area network, WLAN) communications system, a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, and a future 5th generation mobile communication technology (the 5th Generation mobile communication technology, 5G) system or another system that may occur in the future.

Terms used in implementations of this application are merely intended to explain specific embodiments of this application, and are not intended to limit this application. The following describes some terms in this application, to facilitate understanding of a person skilled in the art.

(1) The network parameter processing device may be a terminal device or a server.

(2) The terminal device is also referred to as a terminal or user equipment, and is a device that provides a user with voice and/or data connectivity, for example, a handheld device or a vehicle-mounted device with a wireless connection function. The terminal device may alternatively be a device for detecting data, for example, a sensor. The terminal device may alternatively be an intelligent device, for example, a smart household device or a wearable device deployed indoors. Common terminal devices include, for example, an air quality monitoring sensor, a temperature sensor, a smoke sensor, a mobile phone, a tablet computer, a notebook computer, a palmtop computer, a mobile internet device (mobile internet device, MID), and a wearable device. The wearable device includes, for example, a smartwatch, a smart band, and a pedometer. The terminal device is a terminal device for current and future possible wireless communication or a terminal device for wired communication.

(3) The server may be a network device or a radio access network (radio access network, RAN) device, for example, includes but is not limited to: a wireless access point (for example, a wireless local area network access point), a base station, an evolved NodeB (evolved Node B, eNB), a radio network controller (radio network controller, RNC), a NodeB (Node B, NB), a base station controller (base station controller, BSC), a base station transceiver station (base transceiver station, BTS), a home network device (for example a home evolved NodeB, or a home Node B, HNB), and a baseband unit (base band unit, BBU).

(4) "A plurality of" indicates two or more, and another quantifier is similar to this. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

(5) "Correspondence" may refer to an association relationship or a binding relationship, and that A corresponds B refers to an association relationship or a binding relationship between A and B.

It should be noted that the nouns or terms used in the embodiments of this application may be mutually referenced, and details are not described again.

**EP 3 879 872 B1**

In a conventional technology, with continuous development of network technologies, various types of networks emerge, for example, a wired network and a wireless network. Complex networks account for a large proportion of operating expenses of an operator. Network maintenance and optimization expenses account for 10% to 20% of the total network operating expenses. To improve network performance, a radio parameter on a network needs to be optimized.

Currently, radio parameter optimization mainly depends on manual handling. Specifically, users need to manually observe network performance indicators and select a proper configuration value for the radio parameter. However, more and more factors affect the radio parameter optimization. For example, networking, scenarios, traffic, and tidal traffic all affect the radio parameter optimization. In addition, when a plurality of radio parameters need to be optimized at the same time, complexity of optimizing the radio parameters increases exponentially. Consequently, the manner of manually optimizing the radio parameter cannot meet a current requirement.

Currently, wireless network big data and an artificial intelligence analysis method are further provided to search for an optimal combination configuration of radio parameters. However, the wireless network big data and the artificial intelligence analysis method still cannot find a relatively suitable radio parameter, and the network performance is rarely improved. For example, an inter-frequency handover threshold (Inter-frequency Handover A2 Threshold, InterFreq-HoA2ThdRsrp for short) is optimized to increase a rate of a cell edge user. InterFreqHoA2ThdRsrp is a type of radio parameter. The parameter indicates that if a measurement value of a reference signal received power (reference signal receiving power, RSRP) is lower than a triggering threshold, a measurement report is going to be reported. However, after the parameter is optimized manually or by using an AI algorithm, and after an inter-frequency handover parameter is optimized by using the wireless network big data and the artificial intelligence analysis method, the rate of the cell edge user can increase only by 5% to 10%. For another example, a radio parameter (Initial Delta CQI (Channel Quality Indicator), InitDeltaCqi for short) is optimized by using the wireless network big data and the artificial intelligence analysis method, to increase the rate of the cell edge user. The radio parameter InitDeltaCqi is used to set an initial value of a channel quality indicator (channel quality indicator, CQI) adjustment amount. However, the rate of cell edge user can increase only by about 5%. It can be learned that, after the radio parameter is optimized by using the wireless network big data and the artificial intelligence analysis method, improvement of network performance is very small.

In addition, it takes a relatively short time to optimize the radio parameter by using the wireless network big data and the artificial intelligence analysis method, and radio parameter optimization needs to be completed within a long time. Specifically, N rounds of optimization processes need to be performed on the radio parameter, and a value of the radio parameter of a cell needs to be modified in each round of optimization process. However, because the radio parameter optimization takes a short time, a small quantity of valid samples are obtained. In addition, it is difficult to evaluate whether an optimization result is good or poor due to external factors. For example, 10 to 14 rounds of optimization processes need to be performed on the radio parameter. Each round lasts for one day, and the value of the radio parameter of the cell needs to be modified every day. Few valid samples are obtained during each round of optimization process. Assuming that a radio parameter of each cell in each hour is a valid sample, and a radio parameter generated during off-peak hours are deducted, there are about 14 to 18 valid samples.

Specifically, in a conventional technology, a value-based Q-Learning model is provided to optimize a radio parameter. First, a table needs to be defined, and the table is referred to as a Q-Table. The Q-Table includes a network state (State) and a value of the radio parameter, where the network state may also be referred to as cell state information. For example, load and interference of a cell are used as the cell state information in the Q-Table. An action may be used to represent the radio parameter. It can be learned that the Q-Table is a two-dimensional matrix, and a table 1 is a Q-Table. A larger quantity of radio parameters that need to be optimized indicates a larger quantity of values of the radio parameters and a larger quantity of actions in the Q-Table.

**Table 1 Q-Table**

| State\Action | Action-1 | Action-2 | ... | Action-n |
|---|---|---|---|---|
| State-1 | Q-Value(1,1) | Q-Value(1,2) | ... | Q-Value(1,n) |
| State-2 | Q-Value(2,1) | Q-Value(2,2) | ... | Q-Value(2,n) |
| ... | ... | ... | ... | ... |
| State-m | Q-Value(m,1) | Q-Value(m,2) | ... | Q-Value(m,n) |

In the table 1, m is a quantity of pieces of cell state information, and n is a quantity of radio parameters.

The value-based Q-Learning model needs to be trained, and then a trained value-based Q-Learning model is used to optimize the radio parameter. Specifically, the Q-Table may be constructed, and then a proper radio parameter combination value is selected based on the Q-Table, that is, values of a plurality of radio parameters are selected. Then, the radio parameter combination value is delivered to a wireless network environment for running, a target optimized value

4

corresponding to the radio parameter combination value is obtained, and the Q-Learning model is updated based on cell state information s and a value a of the radio parameter, where the Q-Learning model is Q(s, a) = r + γ(max(Q((s', a')). The foregoing process is a round of optimization process. After N rounds of optimization processes, the Q-Value in the Q-Learning model tends to be stable. In this case, the training is terminated. For example, when two radio parameters need to be optimized, more than 50 to 100 rounds of optimization processes are usually required.

However, the foregoing manner of optimizing the radio parameter by using the value-based Q-Learning model has a plurality of disadvantages and defects. First, a Q-Table needs to be established. However, currently, a Q-Table cannot be established for continuous cell state information. Consequently, the cell state information in the Q-Table is relatively discrete, and this cannot completely describe actual cell state information of a cell. In addition, because the cell state information in the Q-Table is relatively discrete, the cell state information is lost. This hinders accurate modeling and calculation. Second, when m and n that are in the Q-Table are relatively high, a large quantity of pieces of cell state information and radio parameters in the cell state information need to be collected, and a large quantity of network data samples need to be collected. Consequently, a convergence speed of reinforcement learning is very slow, and a speed of finding an optimal radio parameter combination is relatively slow. Third, an existing value-based Q-Learning model uses only network data of a single cell for training, and does not use and learn from network data of another cell for comprehensive learning. Consequently, the used network data is incomplete, and a radio parameter of a to-be-optimized cell cannot be optimized well.

The following describes the technical solutions in the embodiments of this application with reference to the accompanying drawings.

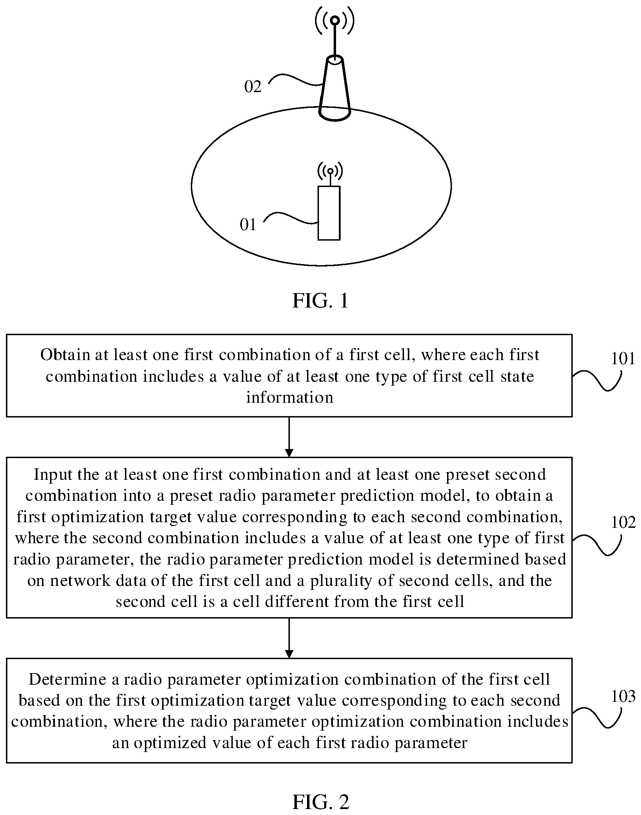

FIG. 1 is a schematic diagram of an application scenario according to an embodiment of this application. An architecture shown in FIG. 1 mainly includes a network parameter processing device 01 and a network device 02. The network parameter processing device 01 may obtain cell state information and a value of a radio parameter that are in the network device 02.

FIG. 2 is a schematic flowchart of a network parameter processing method according to an embodiment of this application. As shown in FIG. 2, the method includes the following steps.

101: Obtain at least one first combination of a first cell, where each first combination includes a value of at least one type of first cell state information.

According to the invention the method is performed by a network parameter processing device.

The network parameter processing device obtains cell state information of a to-be-optimized cell from a network environment, where the to-be-optimized cell is referred to as a first cell. For example, the network parameter processing device obtains first combinations of the first cell at different time points from a network device, where the first combination is a combination of cell state information. The first combination includes values of one or more pieces of first cell state information.

For example, the network parameter processing device obtains a first combination 1 at a time 1, a first combination 2 at a time 2, and a first combination 3 at a time 3. The first combination 1 includes a value a1 of first cell state information a generated by the first cell at the time 1, a value b1 of first cell state information b generated by the first cell at the time 1, and a value c1 of first cell state information c generated by the first cell at the time 1. The first combination 2 includes a value a2 of first cell state information a generated by the first cell at the time 2, a value b2 of first cell state information b generated by the first cell at the time 2, and a value c2 of first cell state information c generated by the first cell at the time 2. The first combination 3 includes a value a3 of first cell state information a generated by the first cell at the time 3, a value b3 of first cell state information b generated by the first cell at the time 3, and a value c3 of first cell state information c generated by the first cell at the time 3.

102: Input the at least one first combination and at least one preset second combination into a preset radio parameter prediction model, to obtain a first optimization target value corresponding to each second combination, where the second combination includes a value of at least one type of first radio parameter, the radio parameter prediction model is determined based on network data of the first cell and a plurality of second cells, and the second cell is a cell different from the first cell.

Optionally, step 102 specifically includes the following substeps.

1021: Combine any one of different first combinations and any one of different second combinations to obtain a plurality of fifth combinations, where each fifth combination includes one first combination and one second combination.

1022: Input each fifth combination into the radio parameter prediction model, to obtain an output value corresponding to the fifth combination.

1023: Determine, based on the output value corresponding to each fifth combination, output value(s) corresponding to fifth combination(s) belonging to a same second combination as first optimization target value(s) corresponding to the same second combination.

For example, the network parameter processing device presets a plurality of combinations of radio parameters, and a combination of the radio parameters is referred to as a second combination. Each second combination includes values of one or more types of first radio parameters. The network parameter processing device presets a radio parameter prediction model as a model determined based on the network data of the first cell and the plurality of second cells, and the second cell is a cell different from the first cell. The network parameter processing device inputs each first combination and each second combination into the radio parameter prediction model for calculation, to obtain a first optimization target value corresponding to each second combination.

For example, the network parameter processing device combines any one of different first combinations and any one of different second combinations to obtain a plurality of fifth combinations, and each obtained fifth combination includes one first combination and one second combination. In this way, each fifth combination includes a group of values of the first cell state information and a group of values of the first radio parameters.

For example, the network parameter processing device obtains a first combination 1 at a time 1, a first combination 2 at a time 2, and a first combination 3 at a time 3. The first combination 1 includes a value a1 of first cell state information a generated by the first cell at the time 1, a value b1 of first cell state information b generated by the first cell at the time 1, and a value c1 of first cell state information c generated by the first cell at the time 1. The first combination 2 includes a value a2 of first cell state information a generated by the first cell at the time 2, a value b2 of first cell state information b generated by the first cell at the time 2, and a value c2 of first cell state information c generated by the first cell at the time 2. The first combination 3 includes a value a3 of first cell state information a generated by the first cell at the time 3, a value b3 of first cell state information b generated by the first cell at the time 3, and a value c3 of first cell state information c generated by the first cell at the time 3.

The network parameter processing device needs to optimize a radio parameter a and a radio parameter b. The network parameter processing device presets the radio parameter a and the radio parameter b, where the radio parameter a has two values, and the radio parameter b has three values. The network parameter processing device obtains six second combinations based on different values of the radio parameter a and the radio parameter b, and the six second combinations are a second combination 1, a second combination 2, a second combination 3, a second combination 4, a second combination 5, and a second combination 6. The second combination 1 includes a value a1 of the radio parameter a and a value b1 of the radio parameter b. The second combination 2 includes the value a1 of the radio parameter a and a value b2 of the radio parameter b. The second combination 3 includes the value a1 of the radio parameter a and a value b3 of the radio parameter b. The second combination 4 includes a value a2 of the radio parameter a and the value b1 of the radio parameter b. The second combination 5 includes the value a2 of the radio parameter a and the value b2 of the radio parameter b. The second combination 6 includes the value a2 of the radio parameter a and the value b3 of the radio parameter b.

Then, the network parameter processing device combines any one of different first combinations and any one of different second combinations. According to the foregoing example, 18 types of fifth combinations may be obtained. A fifth combination 1 includes the first combination 1 and the second combination 1, a fifth combination 2 includes the first combination 1 and the second combination 2, and a fifth combination 3 includes the first combination 1 and the second combination 3. A fifth combination 4 includes the first combination 1 and the second combination 4, a fifth combination 5 includes the first combination 1 and the second combination 5, and a fifth combination 6 includes the first combination 1 and the second combination 6. A fifth combination 7 includes the first combination 2 and the second combination 1, a fifth combination 8 includes the first combination 2 and the second combination 2, and a fifth combination 9 includes the first combination 2 and the second combination 3. A fifth combination 10 includes the first combination 2 and the second combination 4, a fifth combination 11 includes the first combination 2 and the second combination 5, and a fifth combination 12 includes the first combination 2 and the second combination 6. A fifth combination 13 includes the first combination 3 and the second combination 1, a fifth combination 14 includes the first combination 3 and the second combination 2, and a fifth combination 15 includes the first combination 3 and the second combination 3. A fifth combination 16 includes the first combination 3 and the second combination 4, a fifth combination 17 includes the first combination 3 and the second combination 5, and a fifth combination 18 includes the first combination 3 and the second combination 6.

After obtaining the plurality of fifth combinations, the network parameter processing device inputs each fifth combination into the radio parameter prediction model for calculation, to obtain an output value corresponding to the fifth combination, where the output value is an optimized value. For example, according to the foregoing example, the network parameter processing device obtains an output value T corresponding to the fifth combination 1, an output value B corresponding to the fifth combination 2, an output value C corresponding to the fifth combination 3, an output value D corresponding to the fifth combination 4, an output value E corresponding to the fifth combination 5, an output value F corresponding to the fifth combination 6, an output value G corresponding to the fifth combination 7, an output value H corresponding to the fifth combination 8, an output value I corresponding to the fifth combination 9, an output value J corresponding to the fifth combination 10, an output value K corresponding to the fifth combination 11, an output value L corresponding to the fifth combination 12, an output value M corresponding to the fifth combination 13, an output value N corresponding to the fifth combination 14, an output value O corresponding to the fifth combination 15, an output value P corresponding to the fifth combination 16, an output value Q corresponding to the fifth combination 17, and an output value R corresponding to the fifth combination 18.

Then, the network parameter processing device determines output value(s) corresponding to fifth combination(s) belonging to a same second combination as first optimization target value(s) corresponding to the same second combination. In this case, there may be one or more first optimization target values corresponding to each second combination. For example, according to the foregoing example, the network parameter processing device determines that output values corresponding to the second combination 1 are respectively T, G, and M, output values corresponding to the second combination 2 are respectively B, H, and N, output values corresponding to the second combination 3 are respectively C, I, and O, output values corresponding to the second combination 4 are respectively D, J, and P, output values corresponding to the second combination 5 are respectively E, K, and Q, and output values corresponding to the second combination 6 are respectively F, L, and R.

103: Determine a radio parameter optimization combination of the first cell based on the first optimization target value corresponding to each second combination, where the radio parameter optimization combination includes an optimized value of each first radio parameter.

Optionally, step 103 specifically includes the following steps.

1031: Determine, based on the first optimization target value(s) corresponding to each second combination, a mean value of the first optimization target value(s) corresponding to the second combination.

1032: Determine a second combination with a maximum mean value or a minimum mean value as the radio parameter optimization combination of the first cell.

For example, the network parameter processing device performs comprehensive comparison and analysis based on first optimization target values corresponding to second combinations, and determines a radio parameter optimization combination suitable for the first cell, where the radio parameter optimization combination may be applied to the first cell in any cell state. The radio parameter optimization combination includes an optimized value of each first radio parameter.

For example, the network parameter processing device calculates a mean value of the first optimization target values corresponding to the second combinations. For example, according to the example in step 102, the network parameter processing device calculates a mean value of first optimization target values corresponding to the second combinations, to obtain a mean value $(T+G+M)/3$ of first optimization target values of the second combination 1, a mean value $(B+H+N)/3$ of first optimization target values of the second combination 2, a mean value $(C+I+O)/3$ of first optimization target values of the second combination 3, a mean value $(D+J+P)/3$ of first optimization target values of the second combination 4, a mean value $(E+K+Q)/3$ of first optimization target values of the second combination 5, and a mean value $(F+L+R)/3$ of first optimization target values of the second combination 6.

Then, the network parameter processing device determines a second combination with an optimal mean value as the radio parameter optimization combination of the first cell. The optimal mean value may be a maximum mean value or a minimum mean value. The radio parameter optimization combination includes an optimized value of each first radio parameter in the second combination. In this case, the radio parameter optimization combination includes a value of each first radio parameter in the second combination with an optimal mean value. For example, according to the foregoing example, the network parameter processing device compares the mean values of the first optimization target values of the foregoing second combinations, and then the network parameter processing device determines that $(T+G+M)/3$ is optimal, that is, $(T+G+M)/3$ is maximum or minimum. In this case, the network parameter processing device determines the second combination 1 with an optimal mean value, where the second combination 1 includes the value a1 of the radio parameter a and the value b1 of the radio parameter b. Then, the network parameter processing device determines the second combination 1 as the radio parameter optimization combination of the first cell, to be specific, determines that the radio parameter optimization combination of the first cell includes the value a1 of the radio parameter a and the value b1 of the radio parameter b.

In this embodiment, the network parameter processing device may put the optimized value of each first radio parameter that is in the radio parameter optimization combination of the first cell into a network environment for use and operation. Then, the network parameter processing device may repeatedly perform step 101 to step 103, so as to perform iterative optimization on the radio parameter of the first cell.

In this embodiment, the at least one first combination of the first cell is obtained, where each first combination includes the value of at least one type of first cell state information. The at least one first combination and the at least one preset second combination are input into the preset radio parameter prediction model, to obtain the first optimization target value corresponding to each second combination, where the second combination includes the value of at least one type of first radio parameter, the radio parameter prediction model is determined based on the network data of the first cell and the plurality of second cells, and the second cell is a cell different from the first cell. The radio parameter optimization combination of the first cell is determined based on the first optimization target value corresponding to each second combination, where the radio parameter optimization combination includes the optimized value of each first radio parameter. In this way, the radio parameter prediction model that is obtained by performing joint learning based on network data of a plurality of cells is established, and the radio parameters of the cells are optimized by using the radio parameter prediction model. Because the established radio parameter prediction model combines network data features of the plurality of cells, a radio parameter of a to-be-optimized cell may be optimized well. In other words, in this embodiment, joint learning may be performed based on the network data of the plurality of cells. In addition, in this embodiment, cell states represented by the cell state information may be continuous, that is, cell state information of the to-be-optimized cell in a continuous time period may be obtained, so as to reflect an actual network state of the to-be-optimized cell, and then the to-be-optimized cell is analyzed by using the radio parameter prediction model, so as to obtain a radio parameter applicable to the to-be-optimized cell.

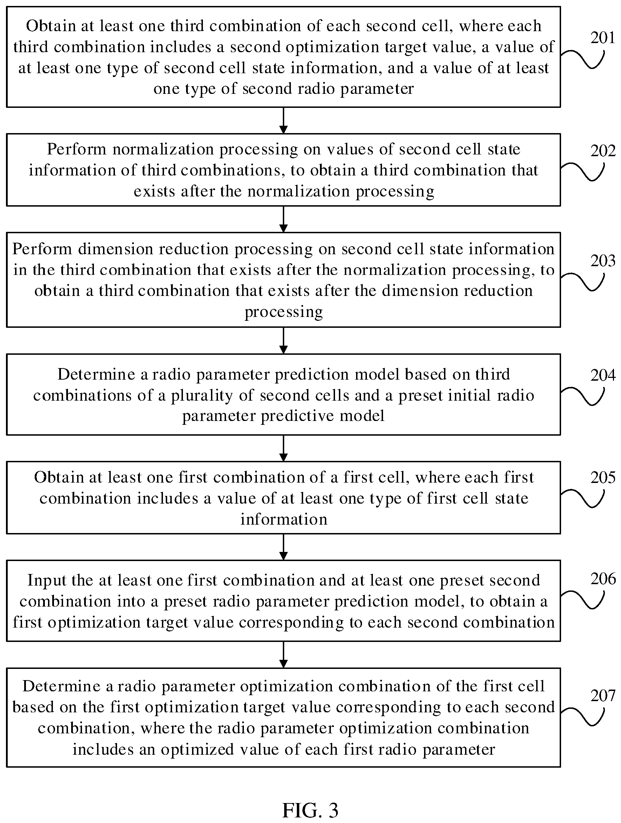

FIG. 3 is a schematic flowchart of another network parameter processing method according to an embodiment of this application. As shown in FIG. 3, the method includes the following steps.

201: Obtain at least one third combination of each second cell, where each third combination includes a second optimization target value, a value of at least one type of second cell state information, and a value of at least one type of second radio parameter.

According to the invention the method is performed by a network parameter processing device.

The network parameter processing device obtains network data of a training cell, where each training cell is referred to as a second cell. The network parameter processing device obtains at least one third combination of each second cell, that is, the second cell has one or more third combinations. Each third combination includes a second optimization target value, a value of at least one type of second cell state information, and a value of at least one type of second radio parameter. In this case, third combinations of all second cells form a to-be-trained network data sample.

For example, the network parameter processing device obtains a third combination 1 and a third combination 2 of a second cell 1. The third combination 1 includes a second optimization target value c1, second cell state information a1 at a time 1, second cell state information a2 at the time 1, a radio parameter b1 at the time 1, and a radio parameter b2 at the time 1. The third combination 2 includes a second optimization target value c2, second cell state information a3 at a time 2, second cell state information a4 at the time 2, a radio parameter b3 at the time 2, and a radio parameter b4 at the time 2. The network parameter processing device further obtains a third combination 3 and a third combination 4 of a second cell 2. The third combination 3 includes a second optimization target value c3, second cell state information a5 at the time 1, second cell state information a6 at the time 1, a radio parameter b5 at the time 1, and a radio parameter b6 at the time 1. The third combination 4 includes a second optimization target value c4, second cell state information a5 at the time 2, second cell state information a6 at the time 2, a radio parameter b5 at the time 2, and a radio parameter b6 at the time 2. The others follow the same rule. The foregoing network data is combined into a network data sample. For example, a format of the network data sample is shown in a table 2.

**Table 2 Network data sample**

| Cell name | Time | Number of users in a cell | Maximum number of users in the cell | Average CQI of the cell | ... | Radio parameter 1 | Radio parameter 2 | ... | Optimization objective |
|---|---|---|---|---|---|---|---|---|---|
| CELL-1 | 2018/9/4 10:00 | 12.56 | 26 | 12.34 | ... | 3 | 10 | ... | 15.5 |
| CELL-1 | 2018/9/4 11:00 | 14.95 | 34 | 11.45 | ... | 3 | 10 | ... | 16.4 |
| CELL-1 | 2018/9/4 12:00 | 25.86 | 54 | 11.34 | ... | 4 | 12 | ... | 18.7 |
| CELL-2 | 2018/9/4 10:00 | 78.89 | 120 | 10.34 | ... | 3 | 10 | ... | 20.6 |
| CELL-2 | 2018/9/4 11:00 | 89.91 | 134 | 10.23 | ... | 3 | 10 | ... | 22.7 |
| CELL-2 | 2018/9/4 12:00 | 104.54 | 154 | 9.89 | ... | 6 | 12 | ... | 25.3 |
| ... | ... | ... | ... | ... | ... | ... | ... | ... | ... |

An abbreviation of each cell below the cell name in the table 2 represents a second cell. The number of users in the cell, the maximum number of users in the cell, and the average CQI of the cell that are in the table 2 are second cell state information. The radio parameter 1 and the radio parameter 2 that are in the table 2 are second radio parameters. Each value below the optimization objective in the table 2 is a second optimization target value. It can be learned that network data in each row in the table 2 is used as a third combination.

For example, cell state information may include the number of users in a cell, the maximum number of users in a cell, an average CQI of a cell, cell load information, cell coverage information, cell interference information, a cell traffic model, and the like.

202: Perform normalization processing on values of second cell state information of third combinations, to obtain a third combination that exists after the normalization processing.

Optionally, step 202 specifically includes the following steps.

2021: Determine a mean value and a variance of a same type of second cell state information based on values that are of second cell state information and that belong to the same type of second cell state information.

2022: Determine a normalized value of the second cell state information in each third combination based on the mean value and the variance of the same type of second cell state information.

For example, the network parameter processing device performs normalization processing on the values of the second cell state information of the third combinations. For example, the network parameter processing device calculates the values that are of the second cell state information and that belong to the same type of second cell state information, to obtain a mean value x_mean of each type of second cell state information, and then calculates a variance x_std of each type of second cell state information. Then, for each type of second cell state information, the network parameter processing device calculates a normalized value x - x_mean)/x_std that is of each piece of second cell state information and that is in each type of second cell state information based on the mean value x_mean and the variance x_std of each type of second cell state information, where x is a value of one piece of second cell state information.

For example, for the network data sample shown in the table 2, in the second cell state information in the table 2, values of second cell state information in each column belong to a same type of second cell state information. In this case, a mean value and a variance of the second cell state information in each column can be calculated, and then a normalized value of each piece of the second cell state information in each column can be calculated.

Alternatively, the network parameter processing device may perform normalization processing on the values of the second cell state information of the third combinations by using a standardized algorithm such as a max-min (min-max) criterion or a standard score (z-score).

Finally, the network parameter processing device may obtain the third combination that exists after the normalization processing.

203: Perform dimension reduction processing on second cell state information in the third combination that exists after the normalization processing, to obtain a third combination that exists after the dimension reduction processing.

For example, the network parameter processing device needs to perform dimension reduction processing on the second cell state information in the third combination, that is, when the third combination has n types of second cell state information, the network parameter processing device needs to control m types of second cell state information in the third combination, where m is less than n, and both m and n are positive integers.

For example, the network parameter processing device may reduce a dimension of the second cell state information to m by using one or more of a partial least squares regression (partial least squares, PLS) method, a feature selection method, or a principal components analysis (principal components analysis, PCA) dimension reduction method. For example, second cell state information with 150 to 300 dimensions is reduced to second cell state information with 50 dimensions. For example, the second cell state information obtained after dimension reduction is shown in the following formula:

$$s = \begin{bmatrix} s_1 \\ s_2 \\ ... \\ s_m \end{bmatrix}$$

204: Determine a radio parameter prediction model based on third combinations of a plurality of second cells and a preset initial radio parameter prediction model.

The initial radio parameter prediction model includes a common model and a cell model. In this case, step 202 includes the following steps.

2041: Input the third combinations of the plurality of second cells into the common model for training, to obtain a trained common model.

2042: Obtain at least one fourth combination of a third cell, where each fourth combination includes a third optimization target value, a value of at least one type of third cell state information, and a value of at least one type of third radio parameter; and the third cell is a cell the same as or different from the second cell, or the third cell is a cell the same as or different from the first cell.

2043: Determine a trained cell model based on the at least one fourth combination and the cell model.

2044: Determine the radio parameter prediction model based on the trained common model and the trained cell model.

Optionally, step 2043 specifically includes the following steps.

2043a: Input the at least one fourth combination into the trained common model, to obtain a common model predicted value corresponding to each fourth combination.

2043b: Determine a residual value of each fourth combination based on the third optimization target value in the fourth combination and the common model predicted value corresponding to the fourth combination.

2043c: Input the residual value of each fourth combination into the cell model for training, to obtain the trained cell model.

Optionally, the trained common model is y = w11 ∗ f(s, A) + w12 ∗ QR(s, A), where f(s,A) is a preset machine learning model, QR(s, A) is a preset quadratic regression model, s is a value of first cell state information, A is a value of a first radio parameter, w11 and w12 are preset weight values, and a sum of w11 and w12 is equal to 1.

Optionally, the quadratic regression model QR(s, A) may be implemented in two manners.

First implementation of the quadratic regression model QR(s, A) : When each second combination has one type of first radio parameter, the quadratic regression model is QR(s, A) = g(s) ∗ a² + h(s) ∗ a + k(s) + c, where the first coefficient

$$g(s) = d * x^{\left(w_1^T \varphi(s)\right)}$$, the second coefficient $$h(s) = -\left(w_2^T \varphi(s)\right)$$, the third coefficient $$k(s) = w_3^T \varphi(s)$$, φ

(s) is a preset kernel function, $w_1$, $w_2$, and $w_3$ are respectively a first weight vector, a second weight vector, and a third weight vector that are obtained after the third combinations of the plurality of second cells are input into the common model for training, d and c are constants, a = A, a is a value of the first radio parameter in the second combination, and x is a preset constant term.

Second implementation of the quadratic regression model QR(s, A) : When each second combination has a plurality of types of first radio parameters, the quadratic regression model is

$$QR(s, A) = g(s) * \sum_{k=1}^{M}[g'(s) * a_k^2] + h(s) * \sum_{k=1}^{M}[h'(s) * a_k] + k(s) + c$$, where the first coefficient

$$g(s) = d * x^{\left(w_1^T \varphi(s)\right)}$$, the second coefficient $$h(s) = -\left(w_2^T \varphi(s)\right)$$, the third coefficient $$k(s) = w_3^T \varphi(s)$$, φ

(s) is a preset kernel function, the fourth coefficient g'(s) = ex p($\beta_{1k}$), the fifth coefficient h'(s) = $\beta_{2k}$, $w_1$, $w_2$, and $w_3$ are respectively a first weight vector, a second weight vector, and a third weight vector that are obtained after the third combinations of the plurality of second cells are input into the common model for training, c is a constant, k ∈ [1, M], M is a quantity of types of first radio parameters in each second combination, M is a positive integer greater than 1, $a_k$ is a $k^{th}$ type of first radio parameter in the second combination, and x is a preset constant term.

Optionally, the radio parameter prediction model is Y = w11 ∗ f(s, A) + w12 ∗ QR(s, A) + L(s,A), where f(s,A) is the preset machine learning model, QR(s,A) is the preset quadratic regression model, s is the value of the first cell state information, A is the value of the first radio parameter, w11 and w12 are preset weight values, a sum of w11 and w12 is equal to 1, L(s,A) is the trained cell model, and the trained cell model is a machine learning model.

For example, it can be learned by analysis on a cell that, in a condition of a same cell state, for example, cell state information of a cell is a fixed value, a concave rule exists between a radio parameter and an optimization target value, and a concave graph is obtained. To be specific, after a value of the radio parameter is adjusted to a smaller or larger value, the optimization target value gradually deteriorates, and a concavity of the concave graph is an optimal value of the optimization target value.

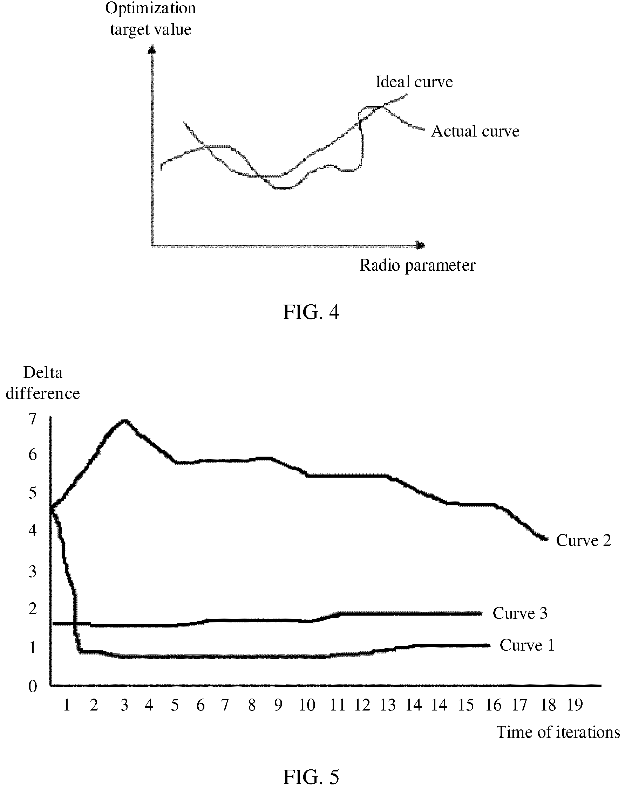

FIG. 4 is a diagram of a relationship between a radio parameter and an optimization target value according to an embodiment of this application. As shown in FIG. 4, a horizontal coordinate represents different values of the radio parameter, and a vertical coordinate represents the optimization target value. In FIG. 4, a user rate in a cell state is less than a proportion of 5 megabits per second (mbps). An ideal curve in FIG. 4 shows a change of the optimization target value when the cell state of the cell is stable. An actual curve in FIG. 4 shows a change of the optimization target value when the cell state of the cell keeps changing. It can be learned that, when the cell state of the cell is stable, that is, values of cell state information of the cell do not change, an optimal optimization target value can be quickly obtained. However, cell states of the cell are different at different moments, and it is difficult to obtain a combination that is of a group of radio parameters and that is applicable to the cell states of the cell. The foregoing problem can be solved by using this embodiment.

The network parameter processing device sets an initial radio parameter prediction model for the radio parameter. The initial radio parameter prediction model includes a common model and a cell model.

First, the network parameter processing device inputs the third combinations of the plurality of second cells into a common model Y = w11 ∗ f(s, A) + w12 ∗ QR(s, A) for training. In a training phase, s in the common model is a value of second cell state information in the third combination, and A in the common model is a value of a second radio parameter in the third combination, where w11 and w12 are preset weight values, and a sum of w11 and w12 is equal to 1. After the training ends, a trained common model may be obtained.

f(s, A) is a preset machine learning model, for example, f(s, A) is one or more of the following: a multi-layer perceptron (multi-layer perceptron, MLP) model, a random forest (random forest, RF) model, a decision tree (decision tree, DT) model, a support vector regression (support vector regression, SVR) model, a linear regression (linear regression, LR) model, and a Bayesian regression (bayesian ridge regression, BR) model. A value of the cell state information and a value of the radio parameter are input into f(s, A), and an obtained output is a model predicted value.

QR(s, A) is a preset quadratic regression model. In the foregoing process, the quadratic regression model QR(s, A) may be implemented in two manners.

First implementation of the quadratic regression model QR(s, A): When one type of radio parameter of the first cell needs to be optimized, and each second combination has only one type of first radio parameter, the quadratic regression model used in this embodiment is QR(s, A) = g(s) ∗ a² + h(s) ∗ a + k(s) + c, where the first coefficient

$$g(s) = d * x^{\left(w_1^T \varphi(s)\right)}$$, the second coefficient $$h(s) = -\left(w_2^T \varphi(s)\right)$$, the third coefficient $$k(s) = w_3^T \varphi(s)$$, $\varphi$

(s) is a preset kernel function, $w_1$, $w_2$, and $w_3$ are respectively a first weight vector, a second weight vector, and a third weight vector that are obtained after the third combinations of the plurality of second cells are input into the common model for training, d and c are constants, and x is a preset constant term. Preferably, a value of x is exp, that is, a value of x is e. In this case, the quadratic regression model is

$$QR(s, A) = d * \exp^{\left(w_1^T \varphi(s)\right)} * a^2 - \left(w_2^T \varphi(s)\right) * a + w_3^T \varphi(s) + c$$. This is in a training phase, and each third combination has one type of second radio parameter, where a = A, and a is a value of the second radio parameter in the third combination.

Second implementation of the quadratic regression model QR(s, A): When a plurality of types of radio parameters of the first cell need to be optimized, and each second combination has a plurality of types of first radio parameters, the quadratic regression model used in this embodiment is

$$QR(s, A) = g(s) * \sum_{k=1}^{M}[g'(s) * a_k^2] + h(s) * \sum_{k=1}^{M}[h'(s) * a_k] + k(s) + c$$, where the first coefficient

$$g(s) = d * x^{\left(w_1^T \varphi(s)\right)}$$, the second coefficient $$h(s) = -\left(w_2^T \varphi(s)\right)$$, the third coefficient $$k(s) = w_3^T \varphi(s)$$, $\varphi$

(s) is a preset kernel function, $w_1$, $w_2$, and $w_3$ are respectively a first weight vector, a second weight vector, and a third weight vector that are obtained after the third combinations of the plurality of second cells are input into the common model for training, c is a constant, the fourth coefficient g'(s) = ex p($\beta_{1k}$), and the fifth coefficient h'(s) = $\beta_{2k}$. Preferably, a value of x is exp, that is, a value of x is e. In this case, the quadratic regression model is $$QR(s, A) = d * \exp^{\left(w_1^T \varphi(s)\right)} *$$

$$\sum_{k=1}^{M}[\exp(\beta_{1k}) * a_k^2] - \left(w_2^T \varphi(s)\right) * \sum_{k=1}^{M}[\beta_{2k} * a_k] + w_3^T \varphi(s) + c$$. This is in a training phase, and each third combination has a plurality of types of second radio parameters, where k ∈ [1, M], M is a quantity of types of second radio parameters in each third combination, M is a positive integer greater than 1, and $a_k$ is the k$^{th}$ type of second radio parameter in the third combination.

It can be learned that, the cell state information may be transformed differently by using the foregoing common model, including but not limited to transformations such as exponent transformation and times transformation, so that radio parameters suitable for various cell states of the to-be-optimized cell can be found.

In the foregoing process, $\varphi$(s) is a coefficient obtained by using a kernel processing algorithm, and p-dimensional data may be mapped to q-dimensional data, that is, the data is increased by a dimension, where q may be equal to 100. $\varphi$(s) may be used to map data from a low-dimensional nonlinear space to a high-dimensional linear space. Optionally, $\varphi$(s) may select a Nystrom kernel approximation method (Nystrom kernel approximation method), a radial basis function (radial basis function, RBF) kernel, or the like.

In the common model of the radio parameter, the f(s, A) model may ensure the precision of the model. The precision is usually represented by a determination coefficient (R-Square), and the precision R-Square can usually reach about 0.8 to 0.9. The QR(s,A) model may ensure the sensitivity of the radio parameter and amplify impact of the radio parameter on the optimization target value. In this way, an optimal solution can be found for the radio parameter, that is, an optimal radio parameter can be found. Then, the f(s, A) model and the QR(s, A) model are added to obtain the foregoing common model y = w11 ∗ f(s, A) + w12 ∗ QR(s, A), so that precision R-Square of the common model reaches about 0.2 to 0.4.

Then, the network parameter processing device obtains network data of a third cell, where the third cell is a cell the same as the first cell. The network parameter processing device obtains at least one fourth combination, and each fourth combination includes a third optimization target value, a value of at least one type of third cell state information, and a value of at least one type of third radio parameter.

Then, the network parameter processing device needs to obtain a trained cell model based on the fourth combination and the cell model. For example, in a first step, the network parameter processing device inputs the at least one fourth combination into the trained common model for calculation, and then the trained common model may output a common model predicted value corresponding to each fourth combination. Therefore, the network parameter processing device obtains a common model predicted value y_predict$_{common}$ corresponding to each fourth combination. In a second step, the network parameter processing device subtracts the common model predicted value y _predict$_{common}$ corresponding to each fourth combination from the third optimization target value y in the fourth combination, to obtain a residual value y$_{resid}$ of the fourth combination. In a third step, the network parameter processing device inputs the residual value y_resid of each fourth combination into a cell model L(s,A) for training. In the training phase, s in the cell model is a value of third cell state information in the fourth combination, and A in the cell model is a value of the third radio parameter in the fourth combination. Finally, the trained cell model may be obtained.

L(s,A) is a preset machine learning model, for example, L(s,A) is one or more of the following: a multi-layer perceptron model, a random forest model, a decision tree model, a support vector regression model, a linear regression model, and a Bayesian regression model. A value of the cell state information and a value of the radio parameter are input into L(s, A), and an obtained output is a model predicted value.

Then, the network parameter processing device forms a radio parameter prediction model $Y = w11 * f(s, A) + w12 * QR(s, A) + L(s,A)$ by using the trained common model and the trained cell model. One radio parameter prediction model is obtained by using the common model and cell model. The precision R-Square of the radio parameter prediction model can usually reach about 0.5 to 0.8.

205: Obtain at least one first combination of the first cell, where each first combination includes a value of at least one type of first cell state information.

For details in this embodiment, refer to step 101 in FIG. 2, and details are not described again.

206: Input the at least one first combination and at least one preset second combination into a preset radio parameter prediction model, to obtain a first optimization target value corresponding to each second combination, where the second combination includes a value of at least one type of first radio parameter, the radio parameter prediction model is determined based on network data of the first cell and a plurality of second cells, and the second cell is a cell different from the first cell.

For the second combination in this embodiment, refer to step 102 in FIG. 2, and details are not described again.

In this embodiment, the network parameter processing device may obtain the radio parameter prediction model by using the foregoing steps, and then the network parameter processing device inputs the first combination and the second combination into the radio parameter prediction model $Y = w11 * f(s, A) + w12 * QR(s, A) + L(s, A)$. This is in a phase in which the optimized value of the first radio parameter is calculated. s in the radio parameter prediction model is a value of the first cell state information, and A in the radio parameter prediction model is a value of the first radio parameter.

The trained common model is $y = w11 * f(s, A) + w12 * QR(s, A)$. This is in a phase in which the optimized value of the first radio parameter is calculated. In the trained common model, s is the value of the first cell state information, and A is the value of the first radio parameter.

The quadratic regression model QR(s, A) in the trained common model may be implemented in two manners.

First implementation of the quadratic regression model QR(s, A): When one type of radio parameter of the first cell needs to be optimized, and each second combination has only one type of first radio parameter, the quadratic regression model is $QR(s, A) = g(s) * a^2 + h(s) * a + k(s) + c$. In this case, a = A, and a is a value of the first radio parameter in the second combination.

Second implementation of the quadratic regression model QR(s, A): When a plurality of types of radio parameters of the first cell need to be optimized, and each second combination has a plurality of types of first radio parameters, the quadratic regression model used in this embodiment is

$$QR(s, A) = g(s) * \sum_{k=1}^{M}[g'(s) * a_k^2] + h(s) * \sum_{k=1}^{M}[h'(s) * a_k] + k(s) + c$$. In this case, each third combination has a plurality of types of second radio parameters, where $k \in [1, M]$, M is a quantity of types of first radio parameters in each second combination, and $a_k$ is the $k^{th}$ type of first radio parameter in the second combination. According to the radio parameter prediction model provided in this embodiment, impact of a parameter on a result value Y may be amplified, an optimal value may be found in a scenario in which the radio parameter has little impact on Y, and network performance may be maximized. In addition, in the foregoing process, a quantity of pieces of cell state information and a quantity of radio parameters are not limited, so that parallel optimization can be implemented in a plurality of states and based on a plurality of parameters. Because the surface of the radio parameter prediction model is smooth, it is not easy to trap in finding out a partial optimal value, and an overall optimal value may be found, that is, radio parameters suitable for various cell states of the to-be-optimized cell may be found.

207: Determine a radio parameter optimization combination of the first cell based on the first optimization target value corresponding to each second combination, where the radio parameter optimization combination includes an optimized value of each first radio parameter.

For details in this embodiment, refer to step 103 in FIG. 2, and details are not described again.

In this embodiment, when one or more types of radio parameters of the first cell need to be optimized, steps 201 to 207 may be repeatedly performed, that is, N times of iterations may be performed. In each time of iterative calculation process, the network parameter processing device puts an optimized value that is of the first radio parameter and that is obtained in a previous iterative calculation into a network environment for operation. Then, after a preset time, the network parameter processing device obtains a new first combination and an actual value of the radio parameter, uses the new first combination as a first combination in a next iteration process, and uses the actual value of the radio parameter as a value of the first radio parameter in the next iteration process. For example, if five types of radio parameters need to be optimized, a quantity N of times of iterations is set to 7. If 10 types of radio parameters need to be optimized, the quantity N of times of iterations is set to 14.

For example, the method in this embodiment is used to optimize five types of radio parameters of the first cell, and an existing single-cell iterative modeling method is used to optimize the five types of radio parameters of the first cell. A process of the single-cell iterative modeling method specifically includes: obtaining cell state information and a radio parameter of a to-be-optimized first cell, where the cell state information includes five types of cell state information such as the number of users in a cell and a proportion of small packets; then obtaining an optimized value of the radio parameter by using a conventional machine learning model; and then putting the optimized value of the radio parameter into a next round of iteration process, and obtaining a final optimized value after a plurality times of iterations.

FIG. 5 is a diagram of a relationship between a quantity of times of iterations and a delta difference according to an embodiment of this application. As shown in FIG. 5, a horizontal coordinate represents a quantity of times of iterations, and a vertical coordinate represents delta differences between recommended values and optimal values. A smaller delta difference value is better. A curve 1 in FIG. 5 is a result obtained by using the method in this embodiment, and after three to five rounds of iterations, delta difference results are basically converged. A curve 2 is a result obtained by using the single-cell iterative modeling method, and after 40 to 50 rounds of iterations, delta difference results are basically converged. A curve 3 is a result of a delta difference obtained when the radio parameter is set to a default value. It can be learned from the foregoing comparison that the method in this embodiment is clearly better than the single-cell iterative modeling method, and a convergence speed of the method in this embodiment is relatively fast.

In this embodiment, the radio parameter prediction model that is obtained by performing joint learning based on network data of a plurality of cells is established, and the radio parameters of the cells are optimized by using the radio parameter prediction model. Because the established radio parameter prediction model combines network data features of the plurality of cells, a radio parameter of a to-be-optimized cell may be optimized well. In other words, in this embodiment, joint learning may be performed based on the network data of the plurality of cells. In addition, in this embodiment, cell states represented by cell state information may be continuous, that is, cell state information of a to-be-optimized cell in a continuous time may be obtained, so as to reflect an actual network state of the to-be-optimized cell. Cell state information of a training cell in a continuous time may be further obtained, so as to reflect the actual network state of the to-be-optimized cell. Then, the to-be-optimized cell is analyzed by using the radio parameter prediction model, so as to obtain a radio parameter applicable to the to-be-optimized cell. In addition, in the foregoing process, a quantity of pieces of cell state information and a quantity of radio parameters are not limited, so that parallel optimization can be implemented in a plurality of states and based on a plurality of parameters. According to the radio parameter prediction model provided in this embodiment, impact of a parameter on a result value Y may be amplified, an optimal value may be found in a scenario in which the radio parameter has little impact on Y, and network performance may be maximized. In addition, the cell state information may be transformed differently by using the radio parameter prediction model, including but not limited to transformations such as exponent transformation and times transformation, so that radio parameters suitable for various cell states of the to-be-optimized cell can be found. According to the method provided in this embodiment, because the surface of the radio parameter prediction model is smooth, it is not easy to trap in finding out a partial optimal value, and an overall optimal value may be found, that is, radio parameters suitable for various cell states of the to-be-optimized cell may be found.

The foregoing describes in detail the network parameter processing method according to the embodiments of this application. The following describes a network parameter processing apparatus in the embodiments of this application.

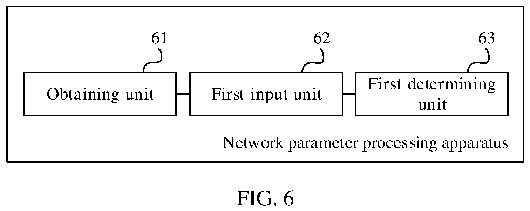

In one example, FIG. 6 is a schematic block diagram of a network parameter processing apparatus according to an embodiment of this application. The apparatus in this embodiment of this application may be the network parameter processing device in the foregoing method embodiments, or may be one or more chips in the network parameter processing device. The apparatus 1 may be configured to perform some or all functions of the network parameter processing device in the foregoing method embodiments. The apparatus may include the following units and modules:

an obtaining unit 61, configured to obtain at least one first combination of a first cell, where each first combination includes a value of at least one type of first cell state information;

a first input unit 62, configured to input the at least one first combination and at least one preset second combination into a preset radio parameter prediction model, to obtain a first optimization target value corresponding to each second combination, where the second combination includes a value of at least one type of first radio parameter, the radio parameter prediction model is determined based on network data of the first cell and a plurality of second cells, and the second cell is a cell different from the first cell; and

a first determining unit 63, configured to determine a radio parameter optimization combination of the first cell based on the first optimization target value corresponding to each second combination, where the radio parameter optimization combination includes an optimized value of each first radio parameter.

The obtaining unit 61 may perform step 101 of the method shown in FIG. 2, or may perform step 205 of the method shown in FIG. 3. The first input unit 62 may perform step 102 of the method shown in FIG. 2, or may perform step 205 of the method shown in FIG. 3. The first determining unit 63 may perform step 106 of the method shown in FIG. 2, or may perform step 207 of the method shown in FIG. 3.

The network parameter processing apparatus in the embodiment shown in FIG. 6 may be configured to execute the technical solution of the embodiment shown in FIG. 2 in the foregoing method. Implementation principles and technical effects thereof are similar, and details are not described herein again.

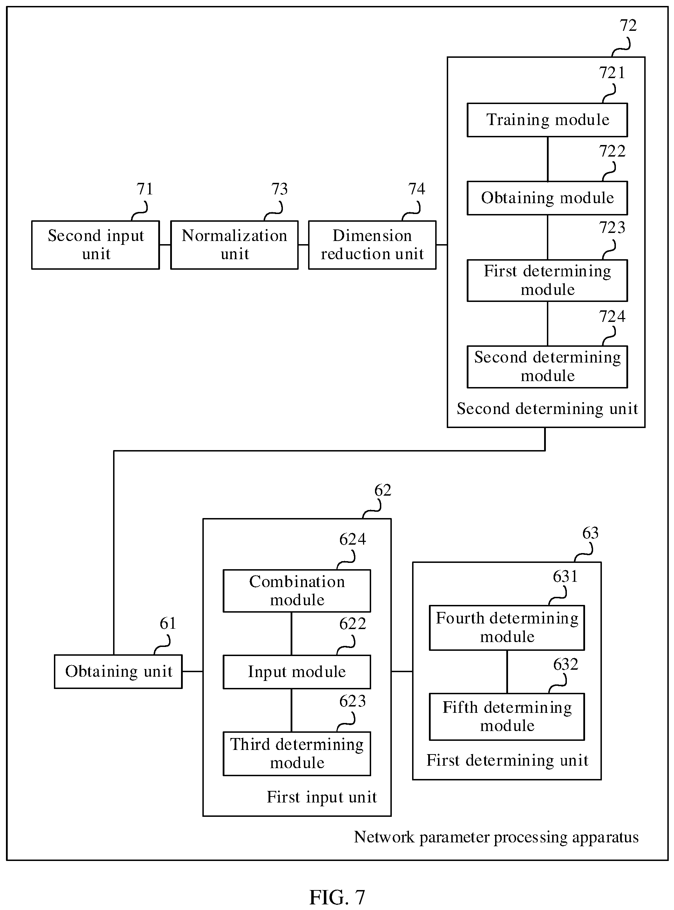

In another example, FIG. 7 is a schematic block diagram of another network parameter processing apparatus according to an embodiment of this application. Based on the apparatus shown in FIG. 6, as shown in FIG. 7, the apparatus further includes:

> a second input unit 71, configured to obtain at least one third combination of each second cell, where each third combination includes a second optimization target value, a of at least one type of second cell state information, and a value of at least one type of second radio parameter, where the second input unit 71 may perform step 201 of the method shown in FIG. 3; and
>
> a second determining unit 72, configured to determine a radio parameter prediction model based on third combinations of a plurality of second cells and a preset initial radio parameter prediction model, where the second determining unit 72 may perform step 204 of the method shown in FIG. 3.

Optionally, the initial radio parameter prediction model includes a common model and a cell model. In this case, the second determining unit 72 includes:

> a training module 721, configured to input the third combinations of the plurality of second cells into the common model for training, to obtain a trained common model, where the training module 721 may perform step 2041 of the method shown in FIG. 3;
>
> an obtaining module 722, configured to obtain at least one fourth combination of a third cell, where each fourth combination includes a third optimization target value, a value of at least one type of third cell state information, and a value of at least one type of third radio parameter, and the third cell is a cell the same as or different from the second cell, or the third cell is a cell the same as or different from the first cell, where the first obtaining module 722 may perform step 2042 of the method shown in FIG. 3;
>
> a first determining module 723, configured to determine a trained cell model based on the at least one fourth combination and the cell model, where the first determining module 723 may perform step 2043 of the method shown in FIG. 3; and
>
> a second determining module 724, configured to determine the radio parameter prediction model based on the trained common model and the trained cell model, where the second determining module 724 may perform step 2044 of the method shown in FIG. 3.

Optionally, the first determining module 723 is specifically configured to: input the at least one fourth combination into the trained common model, to obtain a common model predicted value corresponding to each fourth combination; determine a residual value of each fourth combination based on the third optimization target value in the fourth combination and the common model predicted value corresponding to the fourth combination; and input the residual value of each fourth combination into the cell model for training, to obtain the trained cell model. In this case, the first determining module 723 may perform steps 2043a to 2043c of the method shown in FIG. 3.

Optionally, the trained common model is y = w11 $*$ f(s, A) + w12 $*$ QR(s, A), where f(s,A) is a preset machine learning model, QR(s, A) is a preset quadratic regression model, s is a value of first cell state information, A is a value of a first radio parameter, w11 and w12 are preset weight values, and a sum of w11 and w12 is equal to 1.

Optionally, when each second combination has one type of first radio parameter, the quadratic regression model is QR(s, A) = g(s) $*$ a$^2$ + h(s) $*$ a + k(s) + c, where the first coefficient $g(s) = d * x^{\left(w_1^T \varphi(s)\right)}$, the second coefficient $h(s) = -\left(w_2^T \varphi(s)\right)$, the third coefficient $k(s) = w_3^T \varphi(s)$, $\varphi$(s) is a preset kernel function, $w_1$, $w_2$, and $w_3$ are respectively a first weight vector, a second weight vector, and a third weight vector that are obtained after the third combinations of the plurality of second cells are input into the common model for training, d and c are constants, a = A, a is a value of the first radio parameter in the second combination, and x is a preset constant term.

Optionally, when each second combination has a plurality of types of first radio parameters, the quadratic regression model is $QR(s, A) = g(s) * \sum_{k=1}^{M}[g'(s) * a_k^2] + h(s) * \sum_{k=1}^{M}[h'(s) * a_k] + k(s) + c$, where the first coefficient $g(s) = d * x^{\left(w_1^T \varphi(s)\right)}$, the second coefficient $h(s) = -\left(w_2^T \varphi(s)\right)$, the third

coefficient $k(s) = w_3^T \varphi(s)$, $\varphi(s)$ is a preset kernel function, the fourth coefficient g'(s) = ex p($\beta_{1k}$), the fifth coefficient h'(s) = $\beta_{2k}$, $w_1$, $w_2$, and $w_3$ are respectively a first weight vector, a second weight vector, and a third weight vector that are obtained after the third combinations of the plurality of second cells are input into the common model for training, c is a constant, k $\in$ [1, M], M is a quantity of types of first radio parameters in each second combination, M is a positive integer greater than 1, $a_k$ is a $k^{th}$ type of first radio parameter in the second combination, and x is a preset constant term.

Optionally, the radio parameter prediction model is Y = w11 $_*$ f(s, A) + w12 $_*$ QR(s, A) + L(s,A), where f(s,A) is the preset machine learning model, QR(s,A) is the preset quadratic regression model, s is the value of the first cell state information, A is the value of the first radio parameter, w11 and w12 are preset weight values, a sum of w11 and w12 is equal to 1, L(s,A) is the trained cell model, and the trained cell model is a machine learning model.

Optionally, the apparatus further includes:

a normalization unit 73, configured to: before the second determining unit 72 determines the radio parameter prediction model based on the third combinations of the plurality of second cells and the preset initial radio parameter prediction model, perform normalization processing on values of second cell state information of the third combinations, to obtain a third combination that exists after the normalization processing, where the normalization unit 73 may perform step 202 of the method shown in FIG. 3; and

a dimension reduction unit 74, configured to perform dimension reduction processing on second cell state information in the third combination that exists after the normalization processing, to obtain a third combination that exists after the dimension reduction processing, where the dimension reduction unit 74 may perform step 203 of the method shown in FIG. 3.

Optionally, the normalization unit 73 is specifically configured to: determine a mean value and a variance of a same type of second cell state information based on values that are of the second cell state information and that belong to the same type of second cell state information; and determine a normalized value of second cell state information in each third combination based on the mean value and variance of the same type of second cell state information. The normalization unit 73 may perform steps 2021 and 2022 of the method shown in FIG. 3.

Optionally, the first input unit 62 includes:

a combination module 621, configured to combine any one of different first combinations and any one of different second combinations to obtain a plurality of fifth combinations, where each fifth combination includes one first combination and one second combination, where the combination module 621 may perform step 1021 of the method shown in FIG. 2;

an input module 622, configured to input each fifth combination into the radio parameter prediction model, to obtain an output value corresponding to the fifth combination, where the input module 622 may perform step 1022 of the method shown in FIG. 2; and

a third determining module 623, configured to determine, based on the output value corresponding to each fifth combination, output value(s) corresponding to fifth combination(s) belonging to a same second combination as first optimization target value(s) corresponding to the same second combination, where the third determining module 623 may perform step 1023 of the method shown in FIG. 2.

Optionally, the first determining unit 63 includes:

a fourth determining module 631, configured to determine, based on the first optimization target value(s) corresponding to each second combination, a mean value of the first optimization target value(s) corresponding to the second combination, where the fourth determining module 631 may perform step 1031 of the method shown in FIG. 2; and

a fifth determining module 632, configured to determine a second combination with a maximum mean value or a minimum mean value as the radio parameter optimization combination of the first cell, where the fifth determining module 632 may perform step 1032 of the method shown in FIG. 2.

The network parameter processing apparatus in the embodiment shown in FIG. 7 may be configured to execute the technical solution of the embodiment shown in FIG. 3 in the foregoing method. Implementation principles and technical effects thereof are similar, and details are not described herein again.

In addition, implementation of this embodiment does not depend on whether the embodiment shown in FIG. 6 is implemented, and this embodiment may be independently implemented.

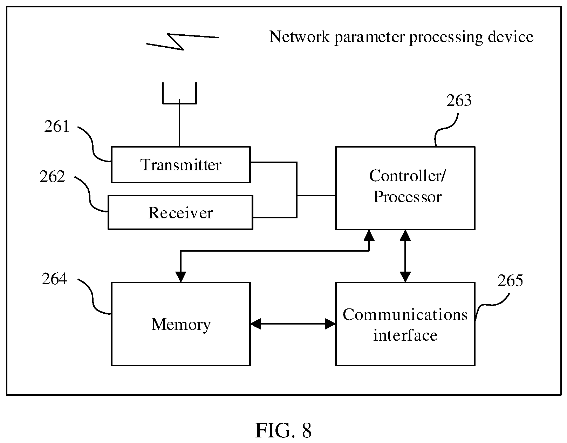

FIG. 8 is a schematic structural diagram of a network parameter processing device according to an embodiment of this application. As shown in FIG. 8, the network parameter processing device includes a transmitter 261, a receiver 262, and a processor 263.

The processor 263 is configured to perform the steps in FIG. 2, or the processor 263 is configured to perform the steps in FIG. 3. The processor 263 is configured to implement the units and modules in FIG. 6 and FIG. 7.

The network parameter processing device in the embodiment shown in FIG. 8 may be configured to execute the technical solution in the foregoing method embodiment, or programs of each unit and module in the embodiments shown in FIG. 6 and FIG. 7. The processor 263 invokes the programs to execute operations in the foregoing method embodiments, so as to implement each module shown in FIG. 6 and FIG. 7.

The processor 263 may also be a controller, and is represented as the "controller/processor 263" in FIG. 8. The transmitter 261 and the receiver 262 are configured to: support information receiving and sending between the network parameter processing device and each device in the network environment in the foregoing embodiment, and support communication between the network parameter processing device and each device in the network environment in the foregoing embodiment.

Further, the network parameter processing device may further include a memory 264, and the memory 264 is configured to store program code and data of the network parameter processing device. Further, the network parameter processing device may include a communications interface 265.

The processor 263 may be, for example, a central processing unit (Central Processing Unit, CPU), or may be one or more integrated circuits configured to implement the foregoing method, for example, one or more application-specific integrated circuits (Application Specific Integrated Circuit, ASIC), one or more microprocessors, or one or more field programmable gate arrays (Field Programmable Gate Array, FPGA). The memory 264 may be a memory, or may be a general name of a plurality of storage elements.

It should be noted that the transmitter 261 included in the network parameter processing device in FIG. 8 provided in this embodiment of this application corresponds to the sending action in the foregoing method embodiment, the processor 263 performs the processing action, and the receiver may perform the receiving action. For details, refer to the foregoing method embodiments.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

A person of skill in the art should be aware that in one or more of the foregoing examples, the functions described in the embodiments of this application may be implemented by using hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communications medium, where the communications medium includes any medium that facilitates transmission of a computer program from one place to another. The storage medium may be any available medium accessible to a general purpose or dedicated computer.

**Claims**

1. A network parameter processing method, wherein the method is performed by a network parameter processing device, the method comprising:

   obtaining (101, 205) at least one first combination of a first cell, wherein each of the at least one first combination comprises a value of at least one type of first cell state information;
   inputting (102, 206) the at least one first combination and at least one preset second combination into a preset radio parameter prediction model, to obtain a first optimization target value corresponding to each of the at least one preset second combination, wherein the each of the at least one preset second combination comprises a value of at least one type of first radio parameter, wherein the preset radio parameter prediction model is a radio parameter prediction model preset by the network parameter processing device and is determined based on network data of the first cell and a plurality of second cells, and the second cell is a cell different from the first cell, wherein network data of a cell includes a value of at least one type of cell state information of the cell and a value of at least one type of radio parameter of the cell; and

determining (103, 207) a radio parameter optimization combination of the first cell based on the first optimization target value corresponding to each of the at least one preset second combination, wherein the radio parameter optimization combination comprises an optimized value of each of the at least one first radio parameter, and applying the determined radio parameter optimization combination to the first cell, wherein the method further comprises:

obtaining (201) at least one third combination of each second cell of the plurality of second cells, wherein each of the at least one third combination comprises a second optimization target value, a value of at least one type of second cell state information, and a value of at least one type of second radio parameter; and

determining (204) the radio parameter prediction model based on third combinations of the plurality of second cells and a preset initial radio parameter prediction model,

wherein the preset initial radio parameter prediction model comprises a common model and a cell model; wherein the common model is expressed as $Y = w11 * f(s,A) + w12 * QR(s, A)$, s in the common model is a value of second cell state information in the third combination, and A in the common model is a value of a second radio parameter in the third combination, where w11 and w12 are preset weight values, and a sum of w11 and w12 is equal to 1, where $f(s, A)$ is a preset machine learning model, where $QR(s, A)$ is a preset quadratic regression model;

wherein the cell model is expressed as $L(s, A)$ which is a preset machine learning model; and the determining the radio parameter prediction model based on third combinations of the plurality of second cells and a preset initial radio parameter prediction model comprises:

inputting the third combinations of the plurality of second cells into the common model for training, to obtain a trained common model;

obtaining at least one fourth combination of a third cell, wherein each of the at least one fourth combination comprises a third optimization target value, a value of at least one type of third cell state information, and a value of at least one type of third radio parameter, and the third cell is a cell the same as the first cell;

determining a trained cell model based on the at least one fourth combination and the cell model; and determining the radio parameter prediction model based on the trained common model and the trained cell model.

2. The method according to claim 1, wherein the determining a trained cell model based on the at least one fourth combination and the cell model comprises:

inputting the at least one fourth combination into the trained common model, to obtain a common model predicted value corresponding to each of the at least one fourth combination;

determining a residual value of each of the at least one fourth combination based on the third optimization target value in the at least one fourth combination and the common model predicted value corresponding to the at least one fourth combination; and

inputting the residual value of each of the at least one fourth combination into the cell model for training, to obtain the trained cell model.

3. The method according to claim 1, wherein the trained common model is $y = w11 * f(s, A) + w12 * QR(s, A)$, wherein $f(s, A)$ is a preset machine learning model, $QR(s, A)$ is a preset quadratic regression model, s is a value of the first cell state information, A is a value of the first radio parameter, w11 and w12 are preset weight values, and a sum of w11 and w12 is equal to 1.

4. The method according to claim 3, wherein when each of the at least one preset second combination has one type of first radio parameter, the quadratic regression model is $QR(s, A) = g(s) * a^2 + h(s) * a + k(s) + c$, wherein

the first coefficient $g(s) = d * x^{\left(w_1^T \varphi(s)\right)}$, the second coefficient $h(s) = -\left(w_2^T \varphi(s)\right)$, the third coefficient

$k(s) = w_3^T \varphi(s)$, $\varphi(s)$ is a preset kernel function, $w_1$, $w_2$, and $w_3$ are respectively a first weight vector, a second weight vector, and a third weight vector that are obtained after the third combinations of the plurality of second cells are input into the common model for training, d and c are constants, a = A, a is a value of the first radio parameter in each of the at least one preset second combination, and x is a preset constant term.

5. The method according to claim 3, wherein when each of the at least one preset second combination has a plurality of types of first radio parameters, the quadratic regression model is

$$QR(s, A) = g(s) * \sum_{k=1}^{M}[g'(s) * a_k^2] + h(s) * \sum_{k=1}^{M}[h'(s) * a_k] + k(s) + c \ ,$$

wherein

the first coefficient $g(s) = d * x^{\left(w_1^T \varphi(s)\right)}$, the second coefficient $h(s) = -\left(w_2^T \varphi(s)\right)$, the third coefficient $k(s) = w_3^T \varphi(s)$, $\varphi(s)$ is a preset kernel function, the fourth coefficient g'(s) = ex p($\beta_{1k}$), the fifth coefficient h'(s) = $\beta_{2k}$, $w_1$, $w_2$, and $w_3$ are respectively a first weight vector, a second weight vector, and a third weight vector that are obtained after the third combinations of the plurality of second cells are input into the common model for training, c is a constant, $k \in [1, M]$, M is a quantity of types of first radio parameters in each of the at least one preset second combination, M is a positive integer greater than 1, $a_k$ is a $k^{th}$ type of first radio parameter in the at least one preset second combination, and x is a preset constant term.

6. The method according to any one of claims 1 to 5, wherein the radio parameter prediction model is Y = w11 $*$ f(s, A) + w12 $*$ QR(s, A) + L(s, A), wherein
f(s, A) is the preset machine learning model, QR(s, A) is the preset quadratic regression model, s is the value of the first cell state information, A is the value of the first radio parameter, w11 and w12 are preset weight values, a sum of w11 and w12 is equal to 1, L(s, A) is the trained cell model, and the trained cell model is a machine learning model.

7. The method according to any one of claims 1 to 6, wherein before the determining the radio parameter prediction model based on third combinations of the plurality of second cells and a preset initial radio parameter prediction model, the method further comprises:

performing (202) normalization processing on values of second cell state information of the third combinations, to obtain a third combination after the normalization processing; and
performing (203) dimension reduction processing on second cell state information in the third combination after the normalization processing, to obtain a third combination after the dimension reduction processing.

8. The method according to claim 7, wherein the performing normalization processing on values of second cell state information of the third combinations, to obtain a third combination after the normalization processing comprises:

determining a mean value and a variance of a same type of second cell state information based on values that are of second cell state information and that belong to the same type of second cell state information; and
determining a normalized value of the second cell state information in each of the third combinations based on the mean value and the variance of the same type of second cell state information.

9. The method according to any one of claims 1 to 8, wherein the inputting the at least one first combination and at least one preset second combination into a preset radio parameter prediction model, to obtain a first optimization target value corresponding to each of the at least one preset second combination comprises:

combining any one of different first combinations and any one of different second combinations to obtain a plurality of fifth combinations, wherein each of the plurality of fifth combinations comprises one first combination and one second combination;
inputting each of the plurality of fifth combinations into the radio parameter prediction model, to obtain an output value corresponding to the each of the plurality of fifth combinations; and
determining, based on the output value corresponding to the each of the plurality of fifth combinations, one or more output values corresponding to a same second combination of the at least one preset second combination as one or more first optimization target values corresponding to the same second combination of the at least one preset second combination; and
the determining a radio parameter optimization combination of the first cell based on the first optimization target value corresponding to each of the at least one preset second combination comprises:

determining, based on the one or more first optimization target values corresponding to each second combination, a mean value of the one or more first optimization target values corresponding to the second combination; and

determining a second combination of the at least one preset second combination with a maximum mean value or a minimum mean value as the radio parameter optimization combination of the first cell.

**10.** A network parameter processing device comprising means for carrying out the steps of the method according to any one of claims 1 to 9.

**11.** A computer-readable storage medium, comprising instructions, wherein when the instructions are run on a network parameter processing device, the network parameter processing device is enabled to perform the method according to any one of claims 1 to 9.

**12.** A computer program product comprising instructions which, when executed by a network parameter processing device, cause the network parameter processing device to carry out the steps of the method according to any one of claims 1 to 9.

**Patentansprüche**

**1.** Verfahren zum Verarbeiten von Netzwerkparametern, wobei das Verfahren durch ein Gerät zum Verarbeiten von Netzwerkparametern durchgeführt wird, wobei das Verfahren Folgendes umfasst:

Gewinnen (101, 205) mindestens einer ersten Kombination einer ersten Zelle, wobei jede der mindestens einen ersten Kombination einen Wert von mindestens einer Art von Informationen zum Zustand einer ersten Zelle umfasst,

Eingeben (102, 206) der mindestens einen Kombination und mindestens einer voreingestellten zweiten Kombination in ein voreingestelltes Modell zur Vorhersage von Funkparametern, um einen ersten Optimierungszielwert zu gewinnen, der jeder der mindestens einen voreingestellten zweiten Kombination entspricht, wobei jede der mindestens einen voreingestellten zweiten Kombination einen Wert von mindestens einer Art eines ersten Funkparameters umfasst, wobei das voreingestellte Modell zur Vorhersage von Funkparametern ein Modell zur Vorhersage von Funkparametern ist, das durch das Gerät zum Verarbeiten von Netzwerkparametern voreingestellt und basierend auf Netzwerkdaten der ersten Zelle und mehreren zweiten Zellen bestimmt wird, und die zweite Zelle eine Zelle ist, die sich von der ersten Zelle unterscheidet, wobei Netzwerkdaten einer Zelle einen Wert mindestens einer Art von Zellzustandsinformationen der Zelle und einen Wert mindestens einer Art eines Funkparameters der Zelle beinhalten, und

Bestimmen (103, 207) einer Funkparameter-Optimierungskombination der ersten Zelle, basierend auf dem ersten Optimierungszielwert, der jeder der mindestens einen voreingestellten zweiten Kombination entspricht, wobei die Funkparameter-Optimierungskombination einen optimierten Wert jedes des mindestens einen ersten Funkparameters umfasst, und Anwenden der bestimmten Funkparameter-Optimierungskombination auf die erste Zelle,

wobei das Verfahren ferner Folgendes umfasst:

Gewinnen (201) mindestens einer dritten Kombination jeder zweiten Zelle der mehreren zweiten Zellen, wobei jede der mindestens einen dritten Kombination einen zweiten Optimierungszielwert, einen Wert mindestens einer Art von Informationen zum Zustand zweiter Zellen und einen Wert mindestens einer Art eines zweiten Funkparameters umfasst, und

Bestimmen (204) des Modells zur Vorhersage von Funkparametern, basierend auf dritten Kombinationen der mehreren zweiten Zellen und eines voreingestellten anfänglichen Modells zur Vorhersage von Funkparametern,

wobei das voreingestellte anfängliche Modell zur Vorhersage von Funkparametern ein gemeinsames Modell und ein Zellmodell umfasst,

wobei das gemeinsame Modell als $Y = w11 * f(s,A) + w12 * QR(s,A)$ ausgedrückt ist, wobei s in dem gemeinsamen Modell ein Wert von Informationen zum Zustand zweiter Zellen in der dritten Kombination ist und A in dem gemeinsamen Modell ein Wert eines zweiten Funkparameters in der dritten Kombination ist, wobei w11 und w12 voreingestellte Gewichtungswerte sind und eine Summe von w11 und w12 gleich 1 ist, wobei $f(s,A)$ ein voreingestelltes Modell maschinellen Lernens ist, wobei $QR(s,A)$ ein voreingestelltes Modell quadratischer Regression ist,

wobei das Zellmodell als L(s,A) ausgedrückt ist, das ein voreingestelltes Modell maschinellen Lernens ist, und

das Bestimmen des Modells zur Vorhersage von Funkparametern auf dritten Kombinationen der mehreren zweiten Zellen basiert und ein voreingestelltes anfängliches Modell zur Vorhersage von Funkparametern Folgendes umfasst:

Eingeben der dritten Kombinationen der mehreren zweiten Zellen in das gemeinsame Modell zwecks Trainings, um ein trainiertes gemeinsames Modell zu gewinnen,
Gewinnen mindestens einer vierten Kombination einer dritten Zelle, wobei jede der mindestens einen vierten Kombination einen dritten Optimierungszielwert, einen Wert mindestens einer Art von Informationen zum Zustand dritter Zellen und einen Wert von mindestens einer Art dritter Funkparameter umfasst und die dritte Zelle eine Zelle ist, die gleich der ersten Zelle ist,
Bestimmen eines trainierten Zellmodells, basierend auf der mindestens einen vierten Kombination und dem Zellmodell, und
Bestimmen des Modells zur Vorhersage von Funkparametern, basierend auf dem trainierten gemeinsamen Modell und dem trainierten Zellmodell.

2. Verfahren nach Anspruch 1, wobei das Bestimmen eines trainierten Zellmodells, basierend auf der mindestens einen vierten Kombination und dem Zellmodell, Folgendes umfasst:

Eingeben der mindestens einen vierten Kombination in das trainierte gemeinsame Modell, um einen Vorhersagewert des gemeinsamen Modells zu gewinnen, der jeder der mindestens einen vierten Kombination entspricht,
Bestimmen eines Restwertes jeder der mindestens einen vierten Kombination, basierend auf dem dritten Optimierungszielwert in der mindestens einen vierten Kombination und dem Vorhersagewert des gemeinsamen Modells, der der mindestens einen vierten Kombination entspricht, und
Eingeben des Restwertes von jeder der mindestens einen vierten Kombination in das Zellmodell zwecks Trainings, um das trainierte Zellmodell zu gewinnen.

3. Verfahren nach Anspruch 1, wobei das trainierte gemeinsame Modell Y = w11 * f(s,A) + w12 * QR(s,A) ist, wobei f(s,A) ein voreingestelltes Modell maschinellen Lernens ist, QR(s,A) ein voreingestelltes Modell quadratischer Regression ist, s ein Wert der Informationen zum Zustand einer ersten Zelle ist, A eine Wert des ersten Funkparameters ist, w11 und w12 voreingestellte Gewichtungswerte sind und eine Summe aus w11 und w12 gleich 1 ist.

4. Verfahren nach Anspruch 3, wobei, wenn jede der mindestens einen voreingestellten zweiten Kombination eine Art eines ersten Funkparameters aufweist, das Modell quadratischer Regression $QR(s,A) = g(s) * a^2 + h(s) * a + k(s) + c$ ist, wobei

der erste Koeffizient $g(s) = d * x^{\left(w_1^T \varphi(s)\right)}$, der zweite Koeffizient $h(s) = -\left(w_2^T \varphi(s)\right)$, der dritte

Koeffizient $k(s) = w_3^T \varphi(s)$, $\varphi(s)$ eine voreingestellte Kernelfunktion ist, $w_1$, $w_2$ und $w_3$ ein erster Gewichtungsvektor, ein zweiter Gewichtungsvektor beziehungsweise ein dritter Gewichtungsvektor sind, die gewonnen werden, nachdem die dritten Kombinationen der mehreren zweiten Zellen in das gemeinsame Modell zwecks Trainings eingegeben wurden, d und c Konstanten sind, a = A, a ein Wert des ersten Funkparameters in jeder der mindestens einen voreingestellten zweiten Kombination ist und x ein voreingestellter kontanter Ausdruck ist.

5. Verfahren nach Anspruch 3, wobei, wenn jede der mindestens einen voreingestellten zweiten Kombination mehrere Arten erster Funkparameter aufweist, das Modell quadratischer Regression

$$QR(s,A) = g(s) * \sum_{k=1}^{M}[g'(s) * a_k^2] + h(s) * \sum_{k-1}^{M}[h'(s) * a_k] + k(s) + c \text{ ist, wobei}$$

der erste Koeffizient $g(s) = d * x^{\left(w_1^T \varphi(s)\right)}$, der zweite Koeffizient $h(s) = -\left(w_2^T \varphi(s)\right)$, der dritte

Koeffizient $k(s) = w_3^T \varphi(s)$, $\varphi(s)$ eine voreingestellte Kernelfunktion ist, der vierte Koeffizient g'(s) = ex p($\beta_{1k}$), der fünfte Koeffizient h'(s) = $\beta_{2k}$, $w_1$, $w_2$ und $w_3$ ein erster Gewichtungsvektor, ein zweiter Gewichtungsvektor beziehungsweise ein dritter Gewichtungsvektor sind, die gewonnen werden, nachdem die dritten Kombinationen der mehreren zweiten Zellen zwecks Trainings in das gemeinsame Modell eingegeben wurden, c eine Konstante ist, $k \in [1, M]$, M eine Menge der Arten erster Funkparameter in jeder der mindestens einen voreingestellten zweiten Kombination ist, M eine positive ganze Zahl größer als 1 ist, $a_k$ eine k. Art des ersten Funkparametes in der mindestens einen voreingestellten zweiten Kombination ist und x ein voreingestellter kontanter Ausdruck ist.

**6.** Verfahren nach einem der Ansprüche 1 bis 5, wobei das Modell zur Vorhersage von Funkparametern $Y = w11 * f(s,A) + w12 * QR(s,A) + L(s,A)$ ist, wobei

$f(s,A)$ das voreingestellte Modell maschinellen Lernens ist, $QR(s,A)$ das voreingestellte Modell quadratischer Regression ist, s der Wert der Informationen zum Zustand einer ersten Zelle ist, A der Wert des ersten Funkparameters ist, w11 und w12 voreingestellte Gewichtungswerte sind, eine Summe von w11 und w12 gleich 1 ist, $L(s,A)$ das trainierte Zellmodell ist und das trainierte Zellmodell ein Modell maschinellen Lernens ist.

**7.** Verfahren nach einem der Ansprüche 1 bis 6, wobei das Verfahren vor dem Bestimmen des Modells zur Vorhersage von Funkparametern, basierend auf dritten Kombinationen der mehreren zweiten Zellen und einem voreingestellten anfänglichen Modell zur Vorhersage von Funkparametern, ferner Folgendes umfasst:

Durchführen (202) einer Normalisierungsverarbeitung an Werten von Informationen zum Zustand zweiter Zellen der dritten Kombinationen, um nach der Normalisierungsverarbeitung eine dritte Kombination zu gewinnen, und Durchführen (203) einer Dimensionsreduktionsverarbeitung an Informationen zum Zustand zweiter Zellen in der dritten Kombination nach der Normalisierungsverarbeitung, um nach der Dimensionsreduktionsverarbeitung eine dritte Kombination zu gewinnen.

**8.** Verfahren nach Anspruch 7, wobei das Durchführen der Normalisierungsverarbeitung an Werten von Informationen zum Zustand zweiter Zellen der dritten Kombinationen, um nach der Normalisierungsverarbeitung eine dritte Kombination zu gewinnen, Folgendes umfasst:

Bestimmen eines Mittelwertes und einer Abweichung einer gleichen Art von Informationen zum Zustand zweiter Zellen, basierend auf Werten, die von Informationen zum Zustand zweiter Zellen sind und die zur gleichen Art von Informationen zum Zustand zweiter Zellen gehören, und Bestimmen eines normalisierten Wertes der Informationen zum Zustand zweiter Zellen in jeder der dritten Kombinationen, basierend auf dem Mittelwert und der Abweichung der gleichen Art von Informationen zum Zustand zweiter Zellen.

**9.** Verfahren nach einem der Ansprüche 1 bis 8, wobei das Eingeben der mindestens einen ersten Kombination und mindestens einer voreingestellten zweiten Kombination in ein voreingestelltes Modell zur Vorhersage von Funkparametern, um einen ersten Optimierungszielwert zu gewinnen, der jeder der mindestens einen voreingestellten zweiten Kombinationen entspricht, Folgendes umfasst:

Kombinieren einer beliebigen von verschiedenen ersten Kombinationen und einer beliebigen von verschiedenen zweiten Kombinationen, um mehrere fünfte Kombinationen zu gewinnen, wobei jede der mehreren fünften Kombinationen eine erste Kombination und eine zweite Kombination umfasst, Eingeben jeder der mehreren fünften Kombinationen in das Modell zur Vorhersage von Funkparametern, um einen Ausgabewert zu gewinnen, der jeder der mehreren fünften Kombinationen entspricht, und Bestimmen, basierend auf dem Ausgabewert, der jeder der mehreren fünften Kombinationen entspricht, eines oder mehrerer Ausgabewerte, die einer gleichen zweiten Kombination der mindestens einen voreingestellten zweiten Kombination entsprechen, als einen oder mehrere erste Optimierungszielwerte, die der gleichen zweiten Kombination der mindestens einen voreingestellten zweiten Kombination entsprechen, und wobei das Bestimmen einer Funkparameter-Optimierungskombination der ersten Zelle, basierend auf dem ersten Optimierungszielwert, der jeder der mindestens einen voreingestellten zweiten Kombination entspricht, Folgendes umfasst:

Bestimmen, basierend auf dem einen oder den mehreren Optimierungszielwerten, die jeder zweiten Kombination entsprechen, eines Mittelwertes des einen oder der mehreren ersten Optimierungszielwerte, die der zweiten Kombination entsprechen, und Bestimmen einer zweiten Kombination der mindestens einen voreingestellten zweiten Kombination mit einem maximalen Mittelwert oder einem minimalen Mittelwert als die Funkparameter-Optimierungskombination der ersten Zelle.

**10.** Gerät zum Verarbeiten von Netzwerkparametern, Mittel zum Ausführen der Schritte des Verfahrens nach einem der Ansprüche 1 bis 9 umfassend.

**11.** Computerlesbares Speichermedium, Anweisungen umfassend, wobei das Gerät zum Verarbeiten von Netzwerkparametern in die Lage versetzt wird, das Verfahren nach einem der Ansprüche 1 bis 9 durchzuführen, wenn die Anweisungen in einem Gerät zum Verarbeiten von Netzwerkparametern ausgeführt werden.

12. Computerprogrammprodukt, Anweisungen umfassend, die bei Ausführung durch ein Gerät zum Verarbeiten von Netzwerkparametern das Gerät zum Verarbeiten von Netzwerkparametern veranlassen, die Schritte des Verfahrens nach einem der Ansprüche 1 bis 9 auszuführen.

**Revendications**

1. Procédé de traitement de paramètre de réseau, dans lequel le procédé est exécuté par un dispositif de traitement de paramètre de réseau, le procédé comprenant :

l'obtention (101, 205) d'au moins une première combinaison d'une première cellule, dans lequel chacune de l'au moins une première combinaison comprend une valeur d'au moins un type de premières informations d'état de cellule ;
l'entrée (102, 206) de l'au moins une première combinaison et d'au moins une deuxième combinaison prédéfinie dans un modèle de prédiction de paramètre radio prédéfini, pour obtenir une première valeur cible d'optimisation correspondant à chacune de l'au moins une deuxième combinaison prédéfinie, dans lequel ladite chacune de l'au moins une deuxième combinaison prédéfinie comprend une valeur d'au moins un type d'un premier paramètre radio, dans lequel le modèle de prédiction de paramètre radio prédéfini est un modèle de prédiction de paramètre radio prédéfini par le dispositif de traitement de paramètres de réseau et est déterminé sur la base de données de réseau de la première cellule et d'une pluralité de deuxièmes cellules, et la deuxième cellule est une cellule différente de la première cellule, dans lequel des données de réseau d'une cellule comprennent une valeur d'au moins un type d'informations d'état de cellule de la cellule et une valeur d'au moins un type de paramètre radio de la cellule ; et
la détermination (103, 207) d'une combinaison d'optimisation de paramètre radio de la première cellule sur la base de la première valeur cible d'optimisation correspondant à chacune de l'au moins une deuxième combinaison prédéfinie, dans lequel la combinaison d'optimisation de paramètre radio comprend une valeur optimisée de chacun de l'au moins un premier paramètre radio, et l'application de la combinaison d'optimisation de paramètre radio déterminée à la première cellule,
dans lequel le procédé comprend en outre :

l'obtention (201) d'au moins une troisième combinaison de chaque deuxième cellule de la pluralité de deuxièmes cellules, dans lequel chacune de l'au moins une troisième combinaison comprend une deuxième valeur cible d'optimisation, une valeur d'au moins un type de deuxièmes informations d'état de cellule et une valeur d'au moins un type d'un deuxième paramètre radio ; et
la détermination (204) du modèle de prédiction de paramètre radio sur la base de troisièmes combinaisons de la pluralité de deuxièmes cellules et d'un modèle de prédiction de paramètre radio initial prédéfini,
dans lequel le modèle de prédiction de paramètre radio initial prédéfini comprend un modèle commun et un modèle de cellule ;
dans lequel le modèle commun est exprimé en tant que $Y = w11 * f(s, A) + w12 * QR(s, A)$, s dans le modèle commun est une valeur de deuxièmes informations d'état de cellule dans la troisième combinaison, et A dans le modèle commun est une valeur d'un deuxième paramètre radio dans la troisième combinaison, où w11 et w12 sont des valeurs de pondération prédéfinies et une somme de w11 et w12 est égale à 1, où $f(s, A)$ est un modèle d'apprentissage par machine prédéfini, où $QR(s, A)$ est un modèle de régression quadratique prédéfini ;
dans lequel le modèle de cellule est exprimé en tant que $L(s, A)$ qui est un modèle d'apprentissage par machine prédéfini ; et
la détermination du modèle de prédiction de paramètre radio sur la base des troisièmes combinaisons de la pluralité de deuxièmes cellules et d'un modèle de prédiction de paramètre radio initial prédéfini comprend :

l'entrée des troisièmes combinaisons de la pluralité de deuxièmes cellules dans le modèle commun pour l'apprentissage, afin d'obtenir un modèle commun entraîné ;
l'obtention d'au moins une quatrième combinaison d'une troisième cellule, dans lequel chacune de l'au moins une quatrième combinaison comprend une troisième valeur cible d'optimisation, une valeur d'au moins un type de troisièmes informations d'état de cellule et une valeur d'au moins un type d'un troisième paramètre radio, et la troisième cellule est une cellule identique à la première cellule ;
la détermination d'un modèle de cellule entraîné sur la base de l'au moins une quatrième combinaison et du modèle de cellule ; et
la détermination du modèle de prédiction de paramètre radio sur la base du modèle commun entraîné et du modèle de cellule entraîné.

**2.** Procédé selon la revendication 1, dans lequel la détermination d'un modèle de cellule entraîné sur la base de l'au moins une quatrième combinaison et du modèle de cellule comprend :

l'entrée de l'au moins une quatrième combinaison dans le modèle commun entraîné, pour obtenir une valeur prédite de modèle commun correspondant à chacune de l'au moins une quatrième combinaison ;
la détermination d'une valeur résiduelle de chacune de l'au moins une quatrième combinaison sur la base de la troisième valeur cible d'optimisation dans l'au moins une quatrième combinaison et de la valeur prédite de modèle commun correspondant à l'au moins une quatrième combinaison ; et
l'entrée de la valeur résiduelle de chacune de l'au moins une quatrième combinaison dans le modèle de cellule pour l'apprentissage, afin d'obtenir le modèle de cellule entraîné.

**3.** Procédé selon la revendication 1, dans lequel le modèle commun entraîné est y = w11 * f(s, A) + w12 * QR(s, A), dans lequel
f(s, A) est un modèle d'apprentissage par machine prédéfini, QR(s, A) est un modèle de régression quadratique prédéfini, s est une valeur des premières informations d'état de cellule, A est une valeur du premier paramètre radio, w11 et w12 sont des valeurs de pondération prédéfinies et une somme de w11 et w12 est égale à 1.

**4.** Procédé selon la revendication 3, dans lequel lorsque chacune de l'au moins une deuxième combinaison prédéfinie a un type du premier paramètre radio, le modèle de régression quadratique est QR(s, A) = g(s) * a$^2$ + h(s) * a + k(s) + c, dans lequel

le premier coefficient $g(s) = d * x^{\left(w_1^T \varphi(s)\right)}$, le deuxième coefficient $h(s) = -\left(w_2^T \varphi(s)\right)$, le troisième coefficient

$k(s) = w_3^T \varphi(s)$, $\varphi(s)$ est une fonction de noyau prédéfinie, $w_1$, $w_2$ et $w_3$ sont respectivement un premier vecteur de pondération, un deuxième vecteur de pondération et un troisième vecteur de pondération qui sont obtenus après l'entrée des troisièmes combinaisons de la pluralité de deuxièmes cellules dans le modèle commun pour l'apprentissage, d et c sont des constantes, a = A, a est une valeur du premier paramètre radio dans chacune de l'au moins une deuxième combinaison prédéfinie et x est un terme constant prédéfini.

**5.** Procédé selon la revendication 3, dans lequel lorsque chacune de l'au moins une deuxième combinaison prédéfinie a une pluralité de types de premiers paramètres radio, le modèle de régression quadratique est

$$QR(s, A) = g(s) * \sum_{k=1}^{M}[g'(s) * a_k^2] + h(s) * \sum_{k=1}^{M}[h'(s) * a_k] + k(s) + c$$

, dans lequel

le premier coefficient $g(s) = d * x^{\left(w_1^T \varphi(s)\right)}$, le deuxième coefficient $h(s) = -\left(w_2^T \varphi(s)\right)$, le troisième coefficient

$k(s) = w_3^T \varphi(s)$, $\varphi(s)$ est une fonction de noyau prédéfinie, le quatrième coefficient g'(s) = ex p($\beta_{1k}$), le cinquième coefficient h'(s) = $\beta_{2k}$, $w_1$, $w_2$ et $w_3$ sont respectivement un premier vecteur de pondération, un deuxième vecteur de pondération et un troisième vecteur de pondération qui sont obtenus après l'entrée des troisièmes combinaisons de la pluralité de deuxièmes cellules dans le modèle commun pour l'apprentissage, c est une constante, k $\in$ [1, M], M est une quantité de types de premiers paramètres radio dans chacune de l'au moins une deuxième combinaison prédéfinie, M est un nombre entier positif supérieur à 1, $a_k$ est un k$^{ème}$ type de premier paramètre radio dans l'au moins une deuxième combinaison prédéfinie et x est un terme constant prédéfini.

**6.** Procédé selon l'une quelconque des revendications 1 à 5, dans lequel le modèle de prédiction de paramètre radio est
Y = w11 * f(s, A) + w12 * QR(s, A) + L(s, A), dans lequel
f(s, A) est le modèle d'apprentissage par machine prédéfini, QR(s, A) est le modèle de régression quadratique prédéfini, s est la valeur des premières informations d'état de cellule, A est la valeur du premier paramètre radio, w11 et w12 sont des valeurs de pondération prédéfinies, une somme de w11 et w12 est égale à 1, L(s, A) est le modèle de cellule entraîné et le modèle de cellule entraîné est un modèle d'apprentissage par machine.

**7.** Procédé selon l'une quelconque des revendications 1 à 6, dans lequel avant la détermination du modèle de prédiction de paramètre radio sur la base des troisièmes combinaisons de la pluralité de deuxièmes cellules et d'un modèle de prédiction de paramètre radio initial prédéfini, le procédé comprend en outre :

l'exécution (202) d'un traitement de normalisation de valeurs de deuxièmes informations d'état de cellule des troisièmes combinaisons, pour obtenir une troisième combinaison après le traitement de normalisation ; et l'exécution (203) d'un traitement de réduction de dimension sur des deuxièmes informations d'état de cellule dans la troisième combinaison après le traitement de normalisation, pour obtenir une troisième combinaison après le traitement de réduction de dimension.

8. Procédé selon la revendication 7, dans lequel l'exécution du traitement de normalisation sur des valeurs de deuxièmes informations d'état de cellule des troisièmes combinaisons, pour obtenir une troisième combinaison après le traitement de normalisation comprend :

la détermination d'une valeur moyenne et d'une variance d'un même type de deuxièmes informations d'état de cellule sur la base des valeurs qui sont des deuxièmes informations d'état de cellule et qui appartiennent au même type de deuxièmes informations d'état de cellule ; et la détermination d'une valeur normalisée des deuxièmes informations d'état de cellule dans chacune des troisièmes combinaisons sur la base de la valeur moyenne et de la variance du même type de deuxièmes informations d'état de cellule.

9. Procédé selon l'une quelconque des revendications 1 à 8, dans lequel l'entrée de l'au moins une première combinaison et d'au moins une deuxième combinaison prédéfinie dans un modèle de prédiction de paramètre radio prédéfini, pour obtenir une première valeur cible d'optimisation correspondant à chacune de l'au moins une deuxième combinaison prédéfinie comprend :

la combinaison d'une quelconque des différentes premières combinaisons et d'une quelconque des différentes deuxièmes combinaisons pour obtenir une pluralité de cinquièmes combinaisons, dans lequel chacune de la pluralité de cinquièmes combinaisons comprend une première combinaison et une deuxième combinaison ; l'entrée de chacune de la pluralité de cinquièmes combinaisons dans le modèle de prédiction de paramètre radio, pour obtenir une valeur de sortie correspondant à chacune de la pluralité de cinquièmes combinaisons ; et la détermination, sur la base de la valeur de sortie correspondant à chacune de la pluralité de cinquièmes combinaisons, d'une ou plusieurs valeurs de sortie correspondant à une même deuxième combinaison de l'au moins une deuxième combinaison prédéfinie en tant qu'une ou plusieurs premières valeurs cibles d'optimisation correspondant à la même deuxième combinaison de l'au moins une deuxième combinaison prédéfinie ; et la détermination d'une combinaison d'optimisation de paramètre radio de la première cellule sur la base de la première valeur cible d'optimisation correspondant à chacune de l'au moins une deuxième combinaison prédéfinie comprend :

la détermination, sur la base de l'une ou des plusieurs premières valeurs cibles d'optimisation correspondant à chaque deuxième combinaison, d'une valeur moyenne de l'une ou des plusieurs premières valeurs cibles d'optimisation correspondant à la deuxième combinaison ; et la détermination d'une deuxième combinaison de l'au moins une deuxième combinaison prédéfinie avec une valeur moyenne maximum ou une valeur moyenne minimum en tant que combinaison d'optimisation de paramètre radio de la première cellule.

10. Dispositif de traitement de paramètre de réseau comprenant des moyens de mettre en œuvre les étapes du procédé selon l'une quelconque des revendications 1 à 9.

11. Support de stockage lisible par ordinateur, comprenant des instructions, dans lequel lorsque les instructions sont exécutées sur un dispositif de traitement de paramètre de réseau, le dispositif de traitement de paramètre de réseau est autorisé à exécuter le procédé selon l'une quelconque des revendications 1 à 9.

12. Produit de programme informatique comprenant des instructions qui, lorsqu'elles sont exécutées par un dispositif de traitement de paramètre de réseau, amènent le dispositif de traitement de paramètre de réseau à mettre en œuvre les étapes du procédé selon l'une quelconque des revendications 1 à 9.

FIG. 1

| Obtain at least one first combination of a first cell, where each first combination includes a value of at least one type of first cell state information | 101 |

| Input the at least one first combination and at least one preset second combination into a preset radio parameter prediction model, to obtain a first optimization target value corresponding to each second combination, where the second combination includes a value of at least one type of first radio parameter, the radio parameter prediction model is determined based on network data of the first cell and a plurality of second cells, and the second cell is a cell different from the first cell | 102 |

| Determine a radio parameter optimization combination of the first cell based on the first optimization target value corresponding to each second combination, where the radio parameter optimization combination includes an optimized value of each first radio parameter | 103 |

FIG. 2

Obtain at least one third combination of each second cell, where each third combination includes a second optimization target value, a value of at least one type of second cell state information, and a value of at least one type of second radio parameter

201

Perform normalization processing on values of second cell state information of third combinations, to obtain a third combination that exists after the normalization processing

202

Perform dimension reduction processing on second cell state information in the third combination that exists after the normalization processing, to obtain a third combination that exists after the dimension reduction processing

203

Determine a radio parameter prediction model based on third combinations of a plurality of second cells and a preset initial radio parameter predictive model

204

Obtain at least one first combination of a first cell, where each first combination includes a value of at least one type of first cell state information

205

Input the at least one first combination and at least one preset second combination into a preset radio parameter prediction model, to obtain a first optimization target value corresponding to each second combination

206

Determine a radio parameter optimization combination of the first cell based on the first optimization target value corresponding to each second combination, where the radio parameter optimization combination includes an optimized value of each first radio parameter

207

FIG. 3

FIG. 4

FIG. 5

61     62     63

| Obtaining unit | First input unit | First determining unit |

Network parameter processing apparatus

FIG. 6

FIG. 7

FIG. 8

**EP 3 879 872 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012072445 A1
- US 20160162783 A1
- WO 9844428 A1